(19) Europäisches Patentamt
European Patent Office
Office européen des brevets

(11) **EP 2 934 030 A1**

(12) **EUROPEAN PATENT APPLICATION**

(43) Date of publication:
**21.10.2015 Bulletin 2015/43**

(51) Int Cl.:
**H04W 8/00** (2009.01)      **H04B 17/318** (2015.01)
**H04M 1/725** (2006.01)      **H04W 4/00** (2009.01)

(21) Application number: **15161278.5**

(22) Date of filing: **27.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **08.04.2014 US 201414247627**

(71) Applicant: **Nokia Technologies OY**
**02610 Espoo (FI)**

(72) Inventors:
• **Palin, Arto**
  **37830 Viiala (FI)**
• **Reunamäki, Jukka**
  **33820 Tampere (FI)**
• **Salokannel, Juha**
  **33710 Tampere (FI)**
• **Väänänen, Riitta**
  **00250 Helsinki (FI)**
• **Vesa, Sampo**
  **00530 Helsinki (FI)**
• **Vilermo, Miikka**
  **37200 Siuro (FI)**
• **Hämäläinen, Matti**
  **37500 Lempäälä (FI)**
• **Kiukkonen, Niko**
  **02880 Veikkola (FI)**

(74) Representative: **Nokia Corporation**
**Intellectual Property Department**
**Karakaari 7**
**02610 Espoo (FI)**

(54) **METHOD, APPARATUS, AND COMPUTER PROGRAM PRODUCT FOR SEAMLESS SWITCHING OF COMMUNICATION CONNECTION**

(57)      In an example embodiment, a method includes scanning, by an apparatus, for wireless messages associated with presence of other wireless devices including a first wireless device to which the apparatus is connected over a wireless connection; maintaining, by the apparatus, measured signal strength of wireless messages received from the connected first wireless device; detecting, by the apparatus, a second wireless message from a second wireless device, while connected to the first wireless device; comparing, by the apparatus, a measured signal strength of the second wireless message, with the maintained signal strength associated with the first wireless device; and switching, by the apparatus, the connection from the first wireless device to the second wireless device when the measured signal strength of the second wireless message is greater than the maintained signal strength associated with the first wireless device.

EP 2 934 030 A1

**Description**

**FIELD:**

The technology field relates to controlling of wireless communication connection based on received messages of detected apparatuses.

**BACKGROUND:**

Modem society has adopted, and is becoming reliant upon, wireless communication devices for various purposes, such as, connecting users of the wireless communication devices with other users. Wireless communication devices can vary from battery powered handheld devices to stationary household and / or commercial devices utilizing electrical network as a power source. Due to rapid development of the wireless communication devices a number of areas capable of enabling entirely new types of communication applications have emerged.

An example of a wireless short-range communication technology is Bluetooth™ communication protocol, which operates in the 2.4 GHz ISM band. Bluetooth™ is a short-range radio network, originally intended as a cable replacement. Bluetooth™ Technical Specifications are published by the Bluetooth™ SIG, Inc. Bluetooth™ Specification version 2.0 + EDR, published Oct 15 2004 has the original functional characteristics of the first version Bluetooth™ Basic Rate (BR) and adds the Enhanced Data Rate (EDR) feature. Bluetooth™ Specification version 2.1 + EDR, published July 26 2007 for Basic Rate / Enhanced Data Rate (BR/EDR), added definitions for new features: Encryption Pause Resume, Erroneous Data reporting, Extended Inquiry Response, Link Supervision Timeout Event, Packet Boundary Flag, Secure Simple Pairing, Sniff Subrating. Bluetooth™ Specification version 3.0 + HS, published April 21 2009, updated the standard to integrate the Alternate MAC/PHY and Unicast Connectionless Data features.

The Bluetooth™ Core Specification, Version 4.0, Bluetooth™ SIG, June 30, 2010 (incorporated herein by reference), includes the Extended Inquiry Response. An Extended Inquiry Response may be used to provide miscellaneous information during the inquiry response procedure. Data types may be defined for such things as local name and supported services, information that otherwise would have to be obtained by establishing a connection. A device that receives a local name and a list of supported services in an extended inquiry response does not have to connect to do a remote name request and a service discovery protocol (SDP) service search, thereby shortening the time to useful information.

**SUMMARY:**

Method, apparatus, and computer program product example embodiments enhance wireless communications device discovery processes.

An example embodiment of the invention includes a method comprising:

scanning, by an apparatus, for wireless messages associated with presence of other wireless devices including a first wireless device to which the apparatus is connected over a wireless connection;

maintaining, by the apparatus, measured signal strength of wireless messages received from the connected first wireless device;

detecting, by the apparatus, a second wireless message from a second wireless device, while connected to the first wireless device;

comparing, by the apparatus, a measured signal strength of the second wireless message, with the maintained signal strength associated with the first wireless device; and

switching, by the apparatus, the connection from the first wireless device to the second wireless device when the measured signal strength of the second wireless message is greater than the maintained signal strength associated with the first wireless device.

An example embodiment of the invention includes a method comprising:

wherein the wireless messages are at least one of a Bluetooth inquiry response message or a Bluetooth Low Energy advertising message.

An example embodiment of the invention includes a method comprising:

wherein switching of the connection from the first wireless device to the second wireless device is performed when the measured signal strength of the second wireless message is greater than the maintained signal strength associated with the first wireless device, by a predefined margin.

An example embodiment of the invention includes a method comprising:

wherein the first and second wireless devices are audio output devices, including at least one of speakers and headphones.

5. An apparatus, comprising:

at least one processor;

at least one memory including computer program code;

the at least one memory and the computer program code configured to, with the at least one processor, cause the apparatus at least to:

scan for wireless messages associated with presence of other wireless devices including a first wireless device to which the apparatus is connected over a wireless connection;

maintain measured signal strength of wireless messages received from the connected first wireless device;

detect a second wireless message from a second wireless device, while connected to the first wireless device;

compare a measured signal strength of the second wireless message, with the maintained signal strength associated with the first wireless device; and

switch the connection from the first wireless device to the second wireless device when the measured signal strength of the second wireless message is greater than the maintained signal strength associated with the first wireless device.

6. The apparatus of claim 5, wherein the wireless messages are at least one of a Bluetooth inquiry response message or a Bluetooth Low Energy advertising message.

7. The apparatus of claim 5, wherein switching of the connection from the first wireless device to the second wireless device is performed when the measured signal strength of the second wireless message is greater than the maintained signal strength associated with the first wireless device, by a predefined margin.

8. The apparatus of claim 5, wherein the first and second wireless devices are audio output devices, including at least one of speakers and headphones.

9. A computer program product comprising computer executable program code recorded on a computer readable, non-transitory storage medium, the computer executable program code comprising:

code for scanning, by an apparatus, for wireless messages associated with presence of other wireless devices including a first wireless device to which the apparatus is connected over a wireless connection;

code for maintaining, by the apparatus, measured signal strength of wireless messages received from the connected first wireless device;

code for detecting, by the apparatus, a second wireless message from a second wireless device, while connected to the first wireless device;

code for comparing, by the apparatus, a measured signal strength of the second wireless message, with the maintained signal strength associated with the first wireless device; and

code for switching, by the apparatus, the connection from the first wireless device to the second wireless device when the measured signal strength of the second wireless message is greater than the maintained signal strength associated with the first wireless device.

10. The computer program product of claim 9, wherein the wireless messages are at least one of a Bluetooth inquiry response message or a Bluetooth Low Energy advertising message.

11. The computer program product of claim 9, wherein switching of the connection from the first wireless device to the second wireless device is performed when the measured signal strength of the second wireless message is greater than the maintained signal strength associated with the first wireless device, by a predefined margin.

12. The computer program product of claim 9, wherein the first and second wireless devices are audio output devices, including at least one of speakers and headphones.

An example embodiment of the invention includes a method comprising:

establishing, by an apparatus, a wireless connection with a first wireless device;

transmitting, by the apparatus, wireless messages indicating its presence while being connected with the first wireless device; and

relinquishing, by the apparatus, the connection with the first wireless device in response to receiving a disconnect from the first wireless device.

An example embodiment of the invention includes a method comprising:

wherein the wireless messages are at least one of a Bluetooth inquiry response message or a Bluetooth Low Energy advertising message.

An example embodiment of the invention includes a method comprising:

wherein the apparatus is an audio output device, including at least one of speaker and headphone.

16. An apparatus, comprising:

at least one processor;

at least one memory including computer program code;

the at least one memory and the computer program code configured to, with the at least one processor, cause the apparatus at least to:

establish a wireless connection with a first wireless device;

transmit wireless messages indicating presence of the apparatus while being connected with the first wireless device; and

relinquish the connection with the first wireless device in response to receiving a disconnect from the first wireless device.

17. The apparatus of claim 16, wherein the wireless messages are at least one of a Bluetooth inquiry response message or a Bluetooth Low Energy advertising message.

18. The apparatus of claim 16, wherein the apparatus is an audio output device, including at least one of speaker and headphone.

19. A computer program product comprising computer executable program code recorded on a computer readable, non-transitory storage medium, the computer executable program code comprising:

code for establishing, by an apparatus, a wireless connection with a first wireless device;

code for transmitting, by the apparatus, wireless messages indicating its presence while being connected with the first wireless device; and

code for relinquishing, by the apparatus, the connection with the first wireless device in response to receiving a disconnect from the first wireless device.

20. The computer program product of claim 19, wherein the wireless messages are at least one of a Bluetooth inquiry response message or a Bluetooth Low Energy advertising message.

The resulting example embodiments enhance wireless communications device discovery processes.

**DESCRIPTION OF THE FIGURES:**

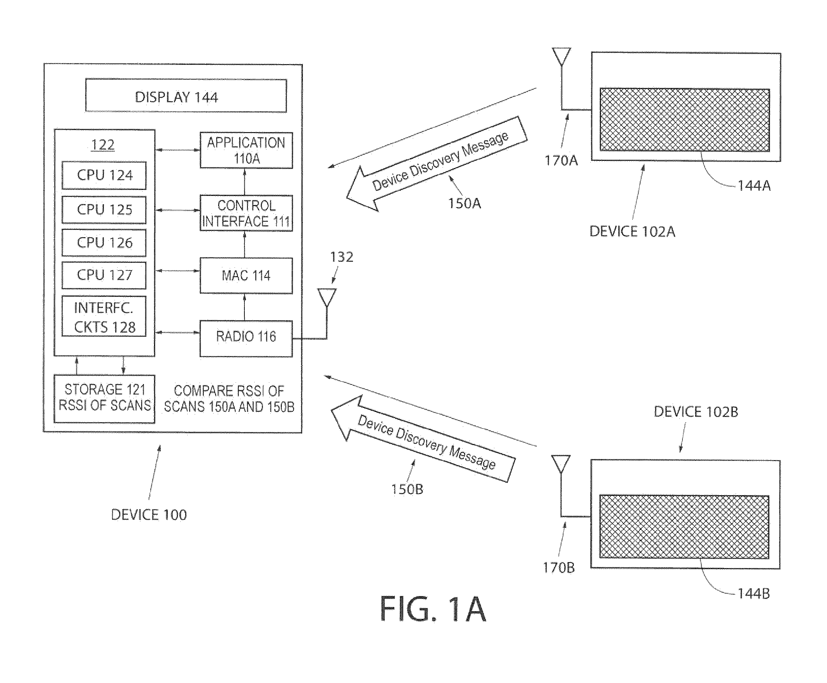

Figure 1A is an illustration of an example embodiment of a network in a device discovery phase, with a discovering device, such as a smart phone, detecting two wireless device discovery messages received from two wireless devices, such as audio output devices, including speakers or headphones. The discovering device compares a characteristic, such as the RSSI associated with each of the two wireless device discovery messages. The wireless device discovery messages may be one of a Bluetooth inquiry response message or a Bluetooth Low Energy advertising message, in accordance with at least one embodiment of the present invention.

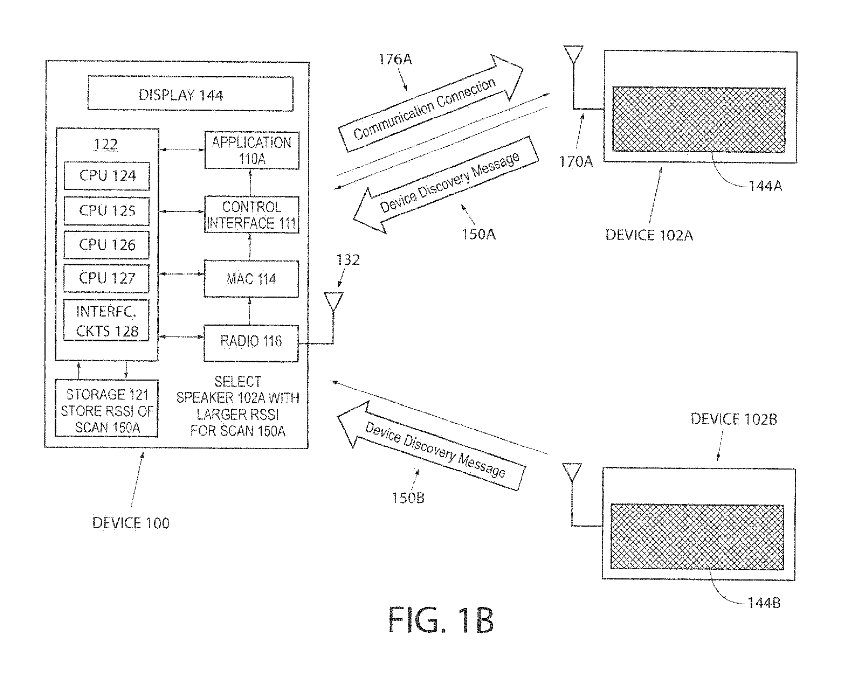

Figure 1B is an illustration of an example embodiment of the network of Figure 1A, wherein the discovering device in a first position relative to the two wireless devices, selects one of the two wireless devices for communication, who's characteristic RSSI of its received wireless device discovery message satisfies a predefined criterion, such as a predefined threshold value. The discovering device stores the characteristic RSSI of the received wireless device discovery message that satisfies the predefined criterion, in accordance with at least one embodiment of the present invention.

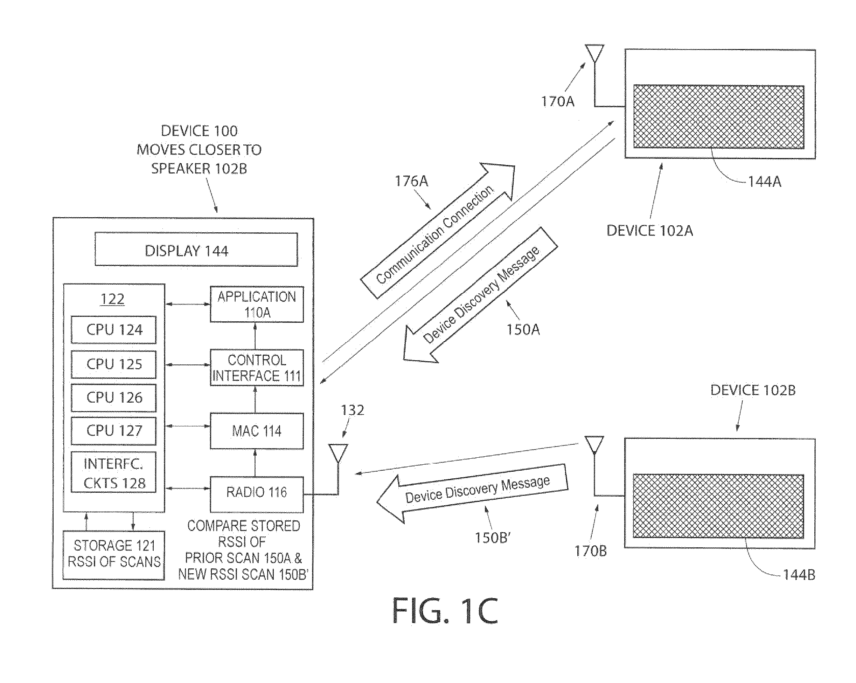

Figure 1C is an illustration of an example embodiment of the network of Figure 1B, wherein the discovering device detects another wireless device discovery message from a sending wireless device, while communicating with the selected one of the two wireless devices, in accordance with at least one embodiment of the present invention.

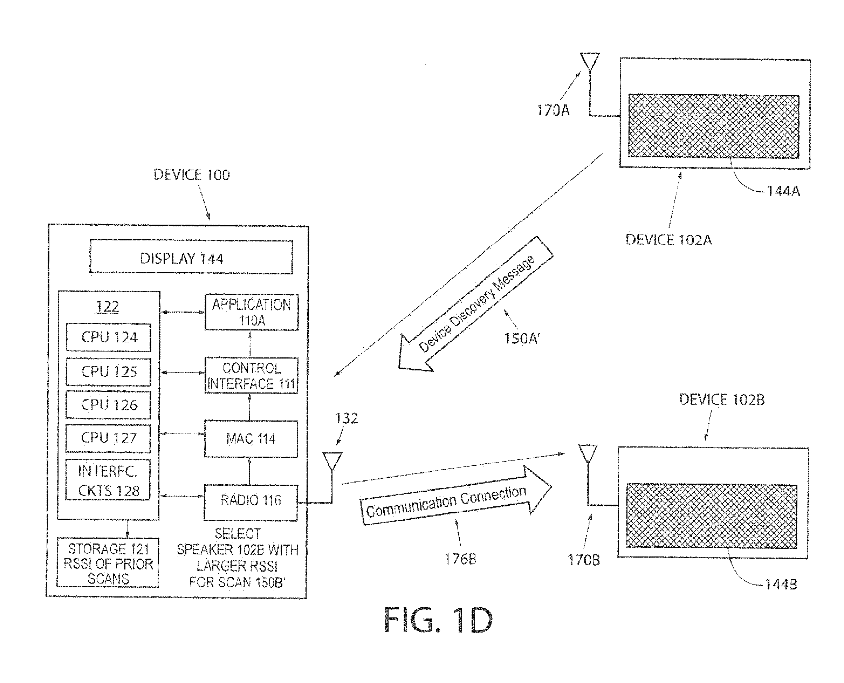

Figure 1D is an illustration of an example embodiment of the network of Figure 1C, wherein the discovering device has moved to a second position relative to the two wireless devices, compares a characteristic RSSI associated with the another wireless device discovery message, with the stored characteristic RSSI of the received wireless device discovery message that satisfied the predefined criterion. The discovering device selects the sending wireless device for communication, based on the comparison, for example the RSSI is greater than the stored RSSI characteristic that satisfied the predefined criterion, in accordance with at least one embodiment of the present invention.

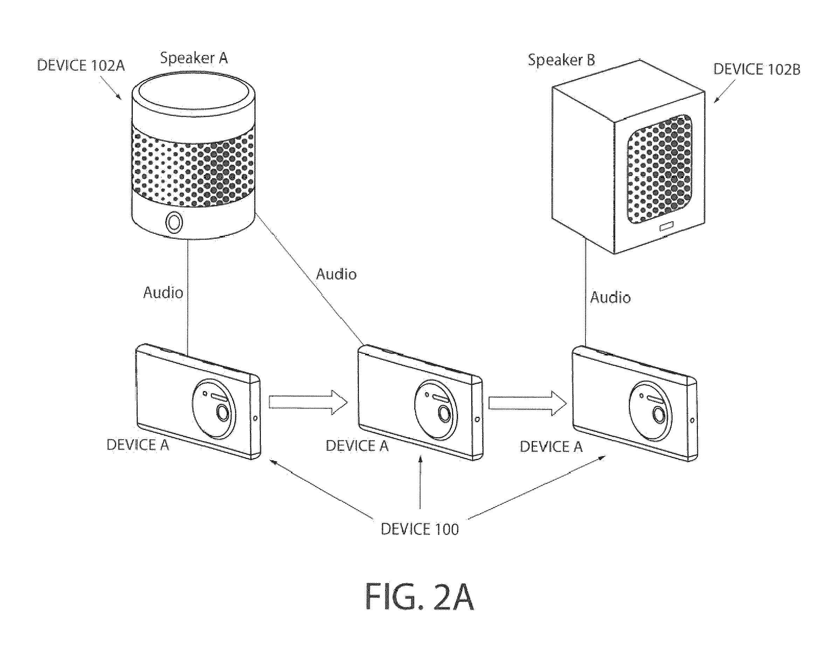

Figure 2A is an illustration of an example embodiment of a wireless network of a smart phone discovering device moving in the vicinity of two wireless speakers, and transferring its wireless audio signal to each respective speaker to which it passes closest, in accordance with at least one embodiment of the present invention.

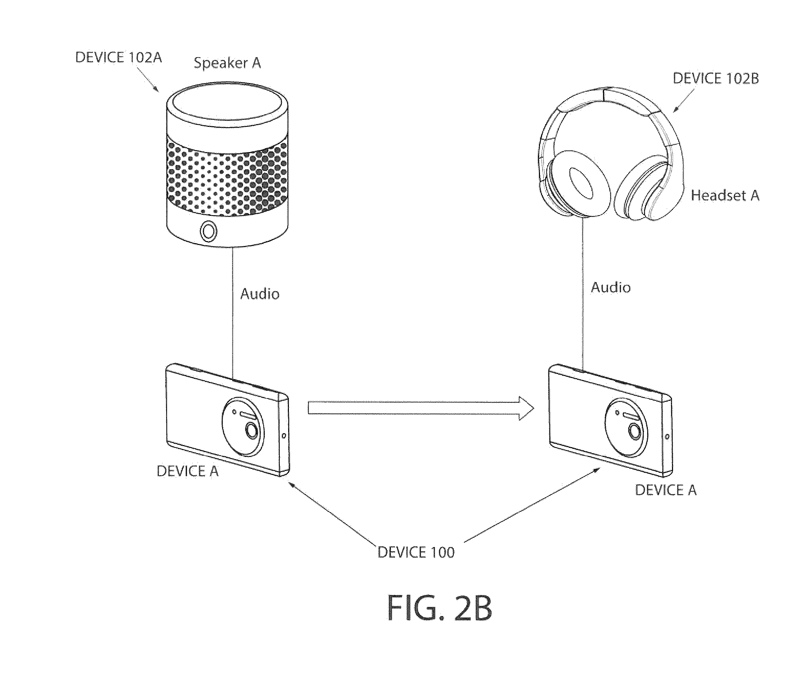

Figure 2B is an illustration of an example embodiment of a wireless network of a smart phone discovering device moving in the vicinity of a wireless speaker and a wireless headset, and transferring its wireless audio signal from the speaker to the headset which it passes closest, in accordance with at least one embodiment of the present invention.

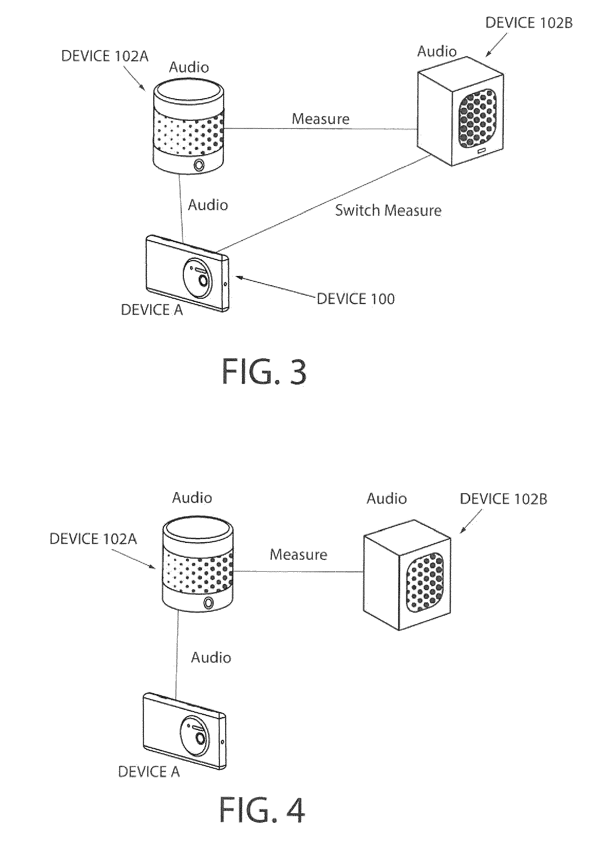

Figure 3 is an illustration of an example embodiment of a wireless network of a smart phone discovering device detecting that it is close to a first speaker and farther from a second speaker, and in response transmitting monaural signals to the closest speaker, in accordance with at least one embodiment of the present invention.

Figure 4 is an illustration of an example embodiment of a wireless network of a smart phone discovering device in Figure 3, detecting that is approximately equally as close to both the first and second speaker, and in response, transmitting stereo audio signals to the two respective speakers, in accordance with at least one embodiment of the present invention.

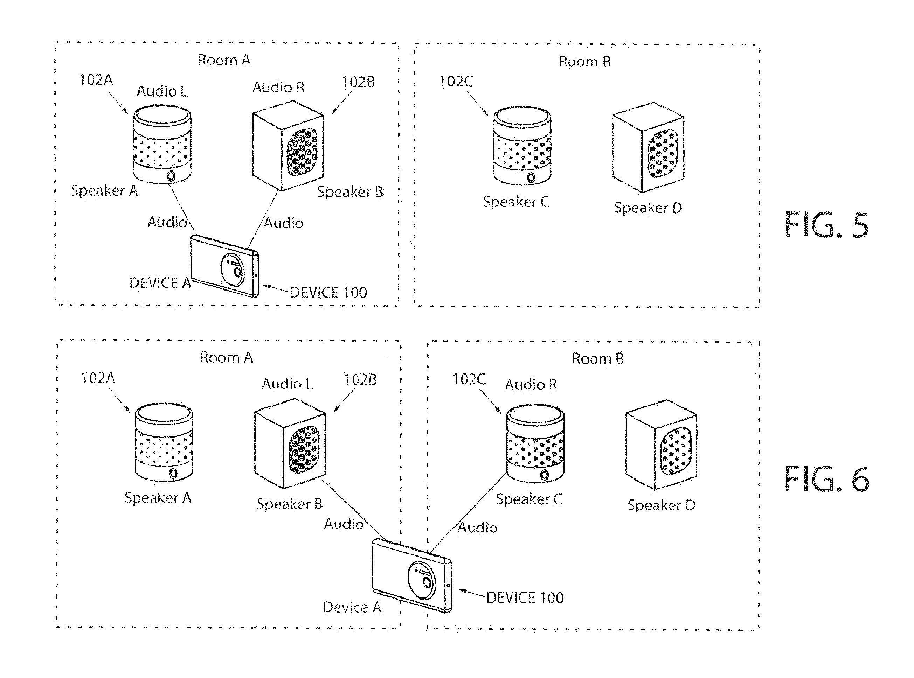

Figure 5 is an illustration of an example embodiment of a wireless network of a smart phone discovering device, detecting that is approximately equally close to both a first and a second speaker, and in response, transmitting left-channel stereo audio signals to the first speaker and right-channel stereo audio signals to the second speaker, in accordance with at least one embodiment of the present invention.

Figure 6 is an illustration of an example embodiment of a wireless network of a smart phone discovering device of Figure 5, but which is moving away from the first speaker and closer to a third speaker, detecting that is approximately equally close to the second speaker and the third speaker, and in response, transmitting left-channel stereo audio signals to the second speaker and right-channel stereo audio signals to the third speaker, in accordance with at least one embodiment of the present invention.

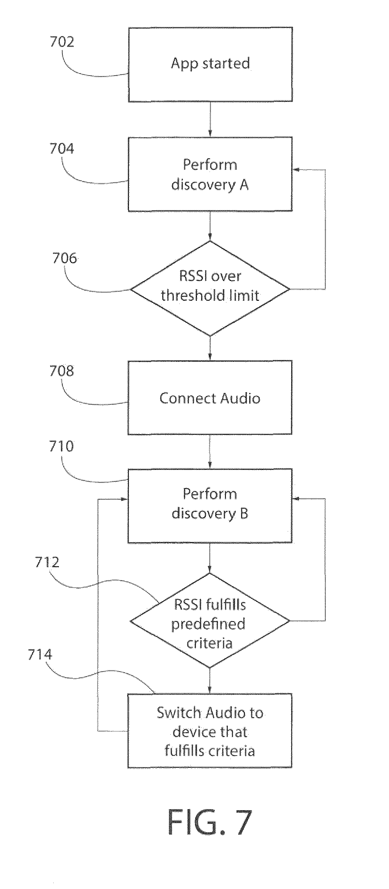

Figure 7 is an illustration of an example flow diagram of an example process in the discovering device carrying out the example operations shown in Figures 1A to 1D, in accordance with at least one embodiment of the present invention.

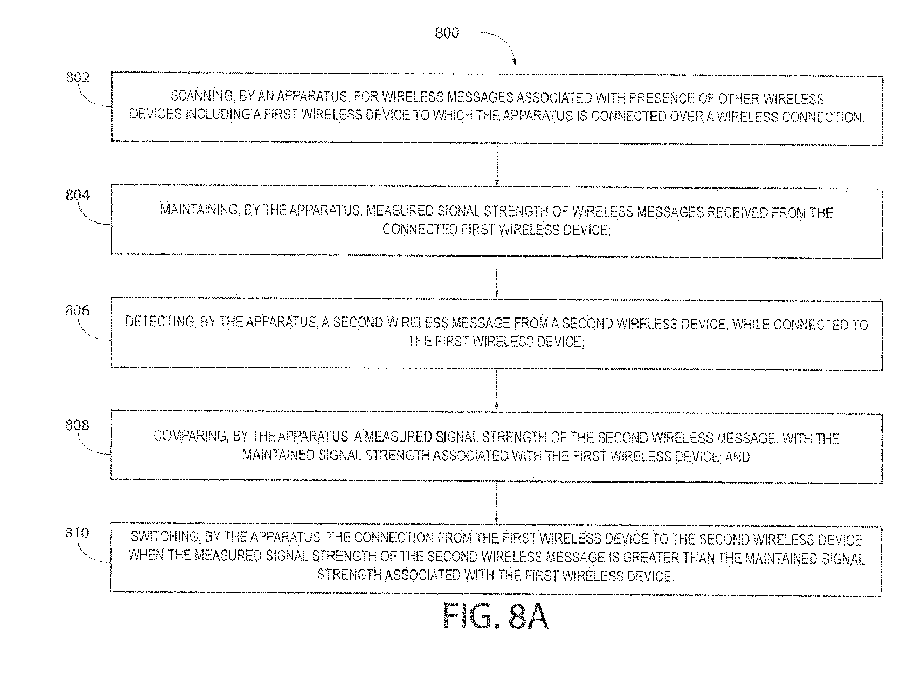

Figure 8A is an illustration of an example flow diagram of an example process in the discovering device carrying out the example operations, in accordance with at least one embodiment of the present invention.

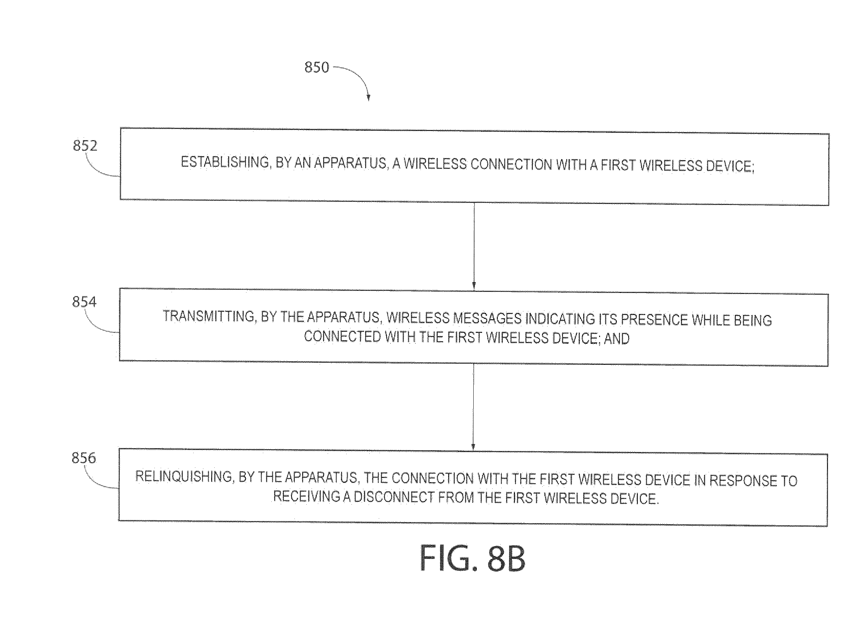

Figure 8B is an illustration of an example flow diagram of an example process in the wireless device, such as a speaker, carrying out the example operations, in accordance with at least one embodiment of the present invention.

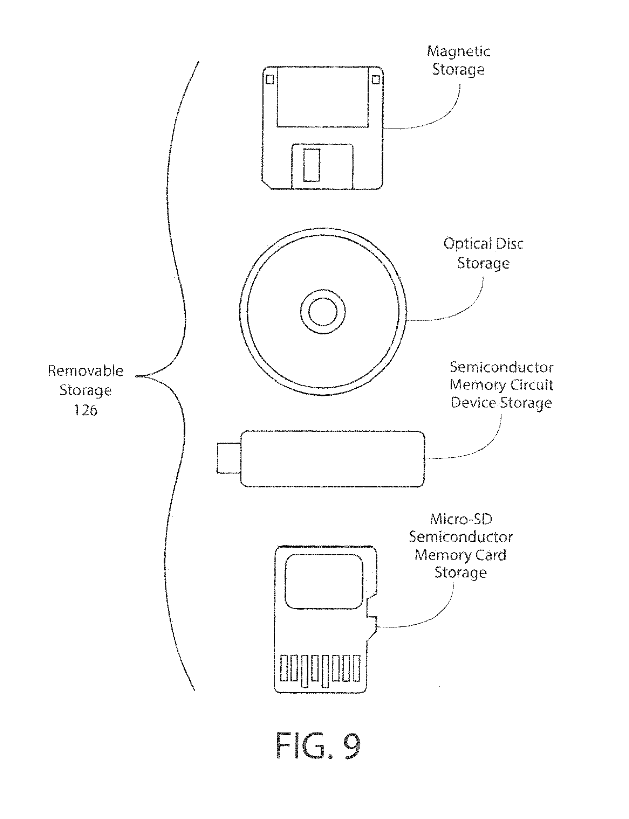

Figure 9 illustrates an example embodiment of the invention, wherein examples of removable storage media are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.

## DISCUSSION OF EXAMPLE EMBODIMENTS OF THE INVENTION:

This section is organized into the following topics:

A. Wireless Short-Range Communication Networks

B. Connection Formation Between Bluetooth™ Devices

C. Touch-to-Select in Bluetooth Technology

D. Bluetooth™ Low Energy (LE) Technology

E. Seamless Audio Switching

## A. Wireless Short-Range Communication Networks

Short-range communication technologies provide communication solutions appropriate for many data applications, without the cost, traffic and legislative concerns of longer-range communication technologies. Popular short-range communication technologies include Bluetooth basic rate/enhanced data rate (BR/EDR), Bluetooth Low Energy (LE), IEEE 802.11 wireless local area network (WLAN), Wireless Universal Serial Bus (WUSB), ZigBee (IEEE 802.15.4, IEEE 802.15.4a), and near field communication technologies, such as radio frequency identification (RFID) and near field communication (NFC) technology that enable contactless identification and interconnection of wireless devices. Bluetooth Technology provides an example of wireless short-range communication establishment.

## B. Connection Formation Between Bluetooth™ Devices

A procedure for forming connections between Bluetooth™ devices is described in the Bluetooth™ Specification, Version 4, June 30, 2010. The Bluetooth™ Baseband is the part of the Bluetooth™ system that implements the Media Access Control (MAC) and physical layer procedures to support the connection formation, exchange of data information streams, and ad hoc networking between Bluetooth™ devices. Connection formation may include inquiry, inquiry scanning, inquiry response, in addition to paging, page scanning, and page response procedures.

## 1. Inquiry

Inquiry is a procedure where a Bluetooth™ device transmits inquiry messages and listens for responses in order to discover the other Bluetooth™ devices that are within the coverage area and set discoverable. Bluetooth™ devices use the inquiry procedure to discover nearby devices, or to be discovered by devices in their locality. A Bluetooth™ device that tries to find other nearby devices is known as an inquiring device and actively sends inquiry requests. Bluetooth™ devices that are available to be found are known as discoverable devices, listen or scan for these inquiry requests, and send responses. The inquiry procedure uses dedicated physical channels for the inquiry requests and responses. The inquiry procedure does not make use of any of the architectural layers above the physical channel, although a transient physical link may be considered to be present during the exchange of inquiry and inquiry response information.

Bluetooth™ devices communicate with one another over 79 physical channels. An inquiring device wanting to discover other devices repetitively probes a first set of 16 frequencies, probing two frequencies every 1250 microseconds. It repeats this at least 256 times. Then, it repetitively probes a second set of 16 frequencies. The inquiring device will repeat entire cycle at least two times. Of the 79 radio carriers, 32 are considered wake-up carriers and the inquiring device broadcasts inquiry packets on these 32 carrier frequencies.

During the inquiry procedure, the inquiring device or master transmits inquiry messages with the general or dedicated inquiry access code. The timing for inquiry is the same as for paging. The identity or ID packet consists of the inquiry access code (IAC). It has a fixed length of 68 bits. The receiver uses a bit correlator to match the received packet to the known bit sequence of the ID packet. In order to discover other devices a device may enter inquiry substate. In this substate, it may repeatedly transmit the inquiry message (ID packet) at different hop frequencies. The inquiry hop sequence is derived from the Lower Address Part (LAP) of the General Inquiry Access Code (GIAC). Thus, even when dedicated inquiry access codes (DIACs) are used, the applied hopping sequence is generated from the GIAC LAP. A device that allows itself to be discovered, may regularly enter the inquiry scan substate to respond to inquiry messages. During the inquiry substate, the discovering device collects the Bluetooth™ device addresses of all devices that respond to the inquiry message. In addition, the discovering device may also collect extended information (e.g. local name and supported services) from devices that respond with an extended inquiry response packet. It may then, if desired, make a connection to any one of the discovered devices by means of the page procedure described below. The inquiry message broadcast by the source does not contain any information about the source. However, it may indicate which class of devices should respond. There is one general inquiry access code (GIAC) to inquire for any device, and 63 values have been reserved as dedicated inquiry access codes (DIAC) that only inquire for a certain type of device. The inquiry access codes are derived from reserved Bluetooth™ device addresses. There is only one DIAC defined in the Bluetooth™ Specification, and it is called the Limited Inquiry Access Code (LIAC). The LIAC is only intended to be used for limited time periods in scenarios where both devices have been explicitly caused to enter this state, usually by user action.

Inquiry scan is a procedure where a Bluetooth™ device listens for inquiry messages received on its inquiry scan physical channel. A device using one of its inquiry scan channels changes the inquiry channel every 1.28s until it receives an inquiry message on the current channel from another Bluetooth™ device. This is identified by the appropriate inquiry access code. The inquiry scanning device will then follow the inquiry response procedure to return a response to the inquiring device. The inquiry scan substate is very similar to the page scan substate. However, instead of scanning for the device's device access code, the receiver may scan for the inquiry access code long enough to completely scan for 16 inquiry frequencies. The inquiry procedure uses 32 dedicated inquiry hop frequencies according to the inquiry hopping sequence. These frequencies are determined by the general inquiry address. The phase is determined by the native clock of the device carrying out the inquiry scan. Instead of, or in addition to, the general inquiry access code, the device may scan for one or more dedicated inquiry access codes. However, the scanning may follow the inquiry scan hopping sequence determined by the general inquiry address. The inquiry scan interval shall be less than or equal to 2.56s.

## 2. Inquiry Response

An inquiry response packet (frequency hop synchronization (FHS)) is transmitted from the inquiry scanning device or slave to the master after the slave has received an inquiry message. This packet contains information necessary for the inquiring master to page the slave and follows 625 microseconds after the receipt of the inquiry message. The inquiry response packet is received by the master at the hop frequency when the inquiry message received by the slave was first in the master-to-slave slot. The slave response substate for inquiries differs completely from the slave response substate applied for pages. When the inquiry message is received in the inquiry scan substate, the recipient may return an inquiry response (FHS) packet containing the recipient's device address (BD_ADDR) and other parameters. If the recipient has non-zero extended inquiry response data to send, it may return an extended inquiry response packet after the FHS packet. On the first inquiry message received in the inquiry scan substate the slave may enter the inquiry response substate. If the slave has non-zero extended inquiry response data to send it may return an FHS packet, with the extended inquiry response bit set to one, to the master 625 microseconds after the inquiry message was received. It may then return an extended inquiry response packet 1250 microseconds after the start of the FHS packet. If the slave's extended inquiry response data is all zeroes the slave may only return an FHS packet with the extended inquiry response bit set to zero.

A contention problem could arise when several devices are in close proximity to the inquiring device or master and all respond to an inquiry message at the same time. However, because every device has a free running clock it is highly unlikely that they all use the same phase of the inquiry hopping sequence. In order to avoid repeated collisions between devices that wake up in the same inquiry hop channel simultaneously, a device will back-off for a random period of time. Thus, if the device receives an inquiry message and returns an FHS packet, it will generate a random number, RAND, between 0 and MAX_RAND. For scanning intervals greater than or equal to 1.28 seconds MAX_RAND will be 1003, however, for scanning intervals less than 1.28s MAX_RAND may be as small as 127. A profile that uses a DIAC may choose to use a smaller MAX_RAND than 1003 even when the scanning interval is greater than or equal to 1.28s. The slave will return to the CONNECTION or STANDBY state for the duration of at least RAND time slots. Before returning to the CONNECTION and STANDBY state, the device may go through the page scan substate. After at least RAND slots, the device will add an offset of 1 to the phase in the inquiry hop sequence (the phase has a 1.28 second resolution) and return to the inquiry scan substate again. If the slave is triggered again, it will repeat the procedure using a new RAND. The offset to the clock accumulates each time an FHS packet is returned. During a period when the inquiry device is broadcasting inquiry packets, a slave may respond multiple times, but on different frequencies and at different times. Reserved synchronous slots should have priority over response packets; that is, if a response packet overlaps with a reserved synchronous slot, it will not be sent, but the next inquiry message is awaited. If a device has extended inquiry response data to send, but the extended inquiry response packet overlaps with a reserved synchronous slot, the FHS packet may be sent with the EIR bit set to zero.

The messaging during the inquiry routines is summarized as follows:

In step 1, the master transmits an inquiry message using the inquiry access code and its own clock.

In step 2, the slave responds with the FHS packet containing the slave's Bluetooth™ device address, native clock and other slave information. This FHS packet is returned at times that tend to be random. If the slave has non-zero extended inquiry response data to send it will return an FHS packet with the EIR bit set to one to the master 625us after the inquiry message was received. It then returns an extended inquiry response packet 1250us after the start of the FHS packet. FHS is always returned 625us after inquiry message was received. But, consecutive FHS packets are returned according to this random process. The FHS packet is not acknowledged in the inquiry routine, but it is retransmitted at other times and frequencies as long as the master is probing with inquiry messages.

In step 3, if the slave has non-zero extended inquiry response data, it sends an extended inquiry response packet to the master.

The retransmission of the inquiry response can be received by the inquiring devices within roughly 80 or 640ms depending on inquiry scan interval of the discovered device. The random backoff for devices using scanning interval <1.28s is from 0 to 79,375ms and for other devices from 0 to 639,375ms. The device using the default inquiry interval is using the latter value range.

In order to collect responses from all devices in the range in an error-free environment, the inquiry substate may have to last for 10.24 s unless the inquirer collects enough responses and aborts the inquiry substate earlier. If desired, the inquirer may also prolong the inquiry substate to increase the probability of receiving all responses in an error-prone environment. In consequence of long inquiry state compared to relatively short backoff times, multiple responses may be received from the single device.

### 3. Extended Inquiry Response

An Extended Inquiry Response may be used to provide miscellaneous information during the inquiry response procedure. Data types are defined for such things as local name and supported services, information that otherwise would have to be obtained by establishing a connection. A device that receives a local name and a list of supported services in an extended inquiry response does not have to connect to do a remote name request and a service discovery protocol (SDP) service search, thereby shortening the time to useful information. If the slave transmits an extended inquiry response packet, it is transmitted 1250 microseconds after the start of the inquiry response packet. The extended inquiry response packet is received by the master at the hop frequency when the inquiry message received by the slave was first in the master-to-slave slot. The extended inquiry response packet is an Asynchronous Connection-oriented Logical transport (ACL) packet with type DM1, DM3, DM5, DH1, DH3 or DH5. To minimize interference it is recommended to use the shortest packet that is capable of containing the data. The packet is sent on the same frequency as the FHS packet, 1250 microseconds after the start of the FHS packet. In the packet header, LT ADDR may be set to zero. TYPE may be one of DM1, DM3, DM5, DH1, DH3 or DH5. FLOW, ARQN and SEQN may all be set to zero and ignored during receipt. The HEC LFSR may be initialized with the same DCI (default check initialization) as for the FHS packet. In the payload header, LLID may contain the value 10 (start of an L2CAP message or no fragmentation). FLOW may be set to zero and ignored upon receipt. The length of the payload body (LENGTH) may be smaller than or equal to 240 bytes. The CRC LFSR may be initialized with the same DCI as for the FHS packet. The data whitening LFSR may be initialized with the same value as for the FHS packet. The length of the payload body (LENGTH) may be smaller than or equal to 240 bytes. The CRC LFSR may be initialized with the same DCI as for the FHS packet. The data whitening LFSR may be initialized with the same value as for the FHS packet. The payload data has two parts, a significant part followed by a non-significant part. The significant part contains a sequence of data structures. The non-significant part contains all zero octets. The baseband may not change any octets in the significant part. When transmitting data, the non-significant part octets may be omitted from the payload. A device may store a single extended inquiry response packet. This packet may be used with all IACs.

## 4. Page

Page is the initial phase of the connection procedure where a device transmits a train of page messages until a response is received from the target device, stopped by the host or a timeout occurs. Page scan is a procedure where a device listens for page messages received on its page scan physical channel. In forming a connection, the paging device will become the master and the page scan device will become the slave in a piconet. Initially, after the slave has received an inquiry message, an inquiry response packet is transmitted from the slave to the master. The inquiry response packet sent from the slave contains information necessary for the inquiring master to page the slave, such as Bluetooth™ device address of the slave device. The necessary information may be received by other means, such as Out-Of-Band pairing. Also the page is not always preceded with inquiry, because the address may be known beforehand (for example saved from previous connections). In the paging procedure, one the Bluetooth™ device that will become the master carries out a page procedure by transmitting page messages in connection request packets to the specified Bluetooth™ slave device that carries out a page scanning procedure to listen for connection request packets from the paging device. A connectable Bluetooth™ device listens for a page request on its page scan channel and, once received, enters into a sequence of exchanges with the paging device. In order for a device to connect to another device, it performs frequency hopping all page scan channel frequencies, sending a page request on each frequency and listening for a response. The page scan channel uses an access code derived from the scanning device's Bluetooth™ device address BD_ADDR to identify communications on the channel. The page scan channel uses a slower hopping rate than the hop rate of the paging device, using the Bluetooth™ device clock of the scanning device as an input. A device listening on its page scan channel remains passive until it receives a page request from another Bluetooth™ device, identified by the page scan channel access code. The two devices will then follow the page procedure to form a connection where the paging device is the master and the page scan device is the slave in a piconet. In order for a paging device to connect to another Bluetooth™ device, it uses the page scan channel of the target device in order to send page requests. If the paging device does not know the phase of the target device's page scan channel, it does not know the current hop frequency of the target device. Therefore, the paging device transmits page requests on each of the page scan hop frequencies and listens for a page response. This is done at a faster hop rate, allowing the paging device to cover all page scan frequencies in a short period of time. The paging device may have some knowledge of the target device's Bluetooth™ clock, such as indicated during a previous inquiry transaction between the two devices, and may be able to predict the phase of the target device's page scan channel. It may use this information to optimize the synchronization of the paging and page scanning process and speed up the formation of the connection.

## 5. Bluetooth™ RSSI

The received signal strength indicator (RSSI) is a measurement of the power present in a received radio signal. Bluetooth receiver circuits may include an RSSI detector circuit to measure the strength of an incoming signal and generate an output representing the signal strength. For example, the received RF signal may be amplified and downconverted to an intermediate frequency (IF); then channel selection is performed on the IF signal, and the power of the IF signal in the selected channel is measured as the receiver signal strength indicator (RSSI) value. If the Bluetooth receiver circuit supports RSSI, the accuracy may be +/- 6 dBm or better.

**RSSI Monitoring of Inquiry Response and Extended Inquiry Response Packets**

During Bluetooth discovery, before a connection is created, the RSSI is measured from Inquiry Response (FHS) packets when it is received by an inquiring device if enabled by the host.

When the controller receives an Inquiry Response (FHS) without following an Extended Inquiry Response, an HCI Inquiry Result with RSSI event is sent by the controller to the host application, which indicates that a remote Bluetooth device has responded during the current Inquiry process. This event will be sent from the Controller to the Host as soon as an Inquiry Response from a remote device is received. The RSSI parameter is measured during the FHS packet returned by each responding slave.

When the controller receives an Inquiry Response (FHS) following with an Extended Inquiry Response, an HCI Extended Inquiry Result event is sent by the controller to the host application, which indicates that a remote Bluetooth device has responded during the current inquiry process with extended inquiry response data. This event will be sent from the Controller to the Host upon reception of an Extended Inquiry Response from a remote device. One single Extended Inquiry Response is returned per event. This event contains RSSI and inquiry response data for the remote device that responded to the latest inquiry. The RSSI parameter is measured during the FHS packet returned by each responding slave.

**RSSI Monitoring of Data Packets Received Over a Connection**

After the discovery phase is completed, once a Bluetooth device is connected to another Bluetooth device, the received signal strength indication (RSSI) may be used by a receiving device to monitor the received power level of the data communication packets received over the connection. The RSSI value is calculated from received packet in the Bluetooth physical layer, and may be read by the host application for example through the host controller interface (HCI) Read RSSI command, for example once per second.

The Read RSSI Command will read the value of the received signal strength indication (RSSI) for data communication packets received over the connection to another Bluetooth controller. The RSSI value is referenced with respect to a Connection_Handle that identifies the connection and is assigned when the connection is created. The Connection_Handle is used by the Bluetooth controller to determine which set of buffers to use and the logical link over which the data is to be sent.

**Measuring Pathloss with the RSSI and the TX Power Level**

The TX Power Level data field in the Extended Inquiry Response packet indicates the transmitted power level of the FHS and EIR packets at the transmitter of the sending device. The TX Power Level data field may be used to calculate path loss of a received packet when the receiving device measures the RSSI of the received FHS packet, using the following equation:

$$\text{pathloss} = \text{Tx Power Level} - \text{RSSI of the inquiry response packet}$$

For example, if Tx Power Level = +4 (dBm) and the RSSI on the inquiry response packet is -60 (dBm) then the total pathloss is +4 - (-60) = +64 dB. If a second inquiry response packet were received at -40dBm with a Tx Power Level data = +15dBm the resulting pathloss would be +55dB. An application may use these pathloss values to choose which device it thinks might be closer (the one with the lower pathloss value).

Unfortunately, due to fading and varying antenna, circuit, and chip characteristics, these resulting pathloss values may have some uncertainty. Some of the uncertainty (for example, due to fading) may be able to be alleviated if multiple inquiry response packets are received from the same device.

**6. Bluetooth™ Host Controller Interface**

The Bluetooth™ radio in a device may include the host controller interface that provides a command interface between the host application in the device and the link layer of the Bluetooth™ radio, also referred to as the controller, to enable access to hardware status and control registers of the Bluetooth™ radio.

The host controller interface (HCI) is described in the Bluetooth™ Core Specification. The Host will receive asynchronous notifications of HCI events from Host Controller Transport Layer. HCI events are used for notifying the Host when something occurs. When the Host discovers that an event has occurred, it will then parse the received event packet to determine which event occurred. The commands and events are sent between the Host and the Controller.

These are grouped into logical groups by function.

The HCI provides a command interface between the host application in a device and the Bluetooth™ link layer, provides access to hardware status and control registers of the Bluetooth™ radio, and provides a uniform method of accessing the Bluetooth™ baseband capabilities.

## Discovery Phase HCI Commands And Events

The device discovery group of commands and events allow a device to discover other devices in the surrounding area. The host controller interface includes the standard HCI Inquiry Result Event logic and HCI Extended Inquiry Result Event logic that recognizes the receipt of the FHS packet and the following EIR packet, respectively. Some of the HCI commands and events for device discovery are described as follows:

## Inquiry Command

The HCI Inquiry command will cause the Bluetooth Controller to enter Inquiry Mode to transmit inquiry packets used to discover other nearby Bluetooth devices.

## Inquiry Result Event

HCI Inquiry Result Event: The inquiry result event indicates that a remote device has responded with an inquiry response (IR), i.e. with an FHS packet, during the current inquiry process. This event will be sent from the Bluetooth™ Controller to the Host as soon as an Inquiry Response from a remote device is received. The event parameters in the HCI inquiry result event include BD_ADDR and Class_of_Device of the remote responding device and Clock_Offset OFFSET(A,B) between the responding device and the inquiring device.

## Inquiry Result with RSSI Event

The Inquiry Result with RSSI event indicates that a remote Bluetooth device has responded with an inquiry response (FHS) packet during the current Inquiry process. The event reported to the host includes the BD_ADDR address for the device that responded, the Class of Device for the device, the clock offset between the responding device and the receiving device, and the measured RSSI of the received inquiry response packet in units of dB. This is similar to the inquiry result event, but it includes the RSSI value calculated by the controller.

## Extended Inquiry Result Event

HCI Extended Inquiry Result Event: The extended inquiry result event indicates that another Bluetooth™ device has responded during the current inquiry process with extended inquiry response data. Data received in this event will be sent from the device's Controller to the Host upon reception of an EIR from a remote device. One single extended inquiry response is returned per event. The event reported to the host includes the received signal strength indication (RSSI) measurement and inquiry response data for the device that responded to the latest inquiry. The RSSI parameter is measured during the FHS packet returned by each responding device. If an extended inquiry response packet from the same remote device is correctly received in a later response, another event is generated. The Extended_Inquiry_Response data fields are not interpreted by the controller. The standard HCI Extended Inquiry Result Event logic performs the HCI extended inquiry result event procedure to extract the data from the received extended inquiry response packet and to send this data to the host application. The received EIR data extracted from the packet may be passed unaltered to the host application.

## Read Inquiry Response Transmit Power Level Command

This command will read the inquiry response Transmit Power level data, expressed in a field of the EIR packet, indicating the power that was used to transmit the FHS and EIR data packets during the discovery phase.

## HCI Write Extended Inquiry Response Command

The Write Extended Inquiry Response command writes the extended inquiry response to be sent to an inquiring device during the extended inquiry response procedure. The write extended inquiry response command will write the data that the device's host wishes to send in the extended inquiry response packet during inquiry response. The FEC_Required command parameter states if forward error correction (FEC) encoding is required. The initial value of the inquiry response data is all zero octets. The controller does not interpret the extended inquiry response data, but passes it on to the baseband medium access control and physical radio for transmission in an EIR packet.

**Write Inquiry Transmit Power Level Command**

The Write Inquiry Transmit Power Level command is used by the transmitting device to write the transmit power level used to transmit the inquiry data packets.

**Connection Phase HCI Commands and Events**

**Read RSSI Command**

After the discovery phase is completed, once a Bluetooth device is connected to another Bluetooth device, the received signal strength indication (RSSI) may be used by a receiving device to monitor the received power level of the data communication packets received over the connection. The RSSI value is calculated by the Bluetooth physical layer, and may be read by the host application through the host controller interface (HCI) Read RSSI command.

The Read RSSI command will read the value of the received signal strength indication (RSSI) for data communication packets received over the connection to another Bluetooth controller. The RSSI value is referenced with respect to a Connection_Handle that identifies the connection and is assigned when the connection is created. The Connection_Handle is used by the Bluetooth controller to determine which set of buffers to use and the logical link over which the data is to be sent.

The RSSI parameter in the Read RSSI command is a signed 8-bit value, and is interpreted as an indication of arriving signal strength at the antenna measured in dBm. This command reads the Received Signal Strength Indication (RSSI) value from the Controller. For a Basic Rate / Enhanced Data Rate (BR/EDR) Controller, a Connection_Handleis used as the Handle command parameter and return parameter. The RSSI parameter returns the difference between the measured Received Signal Strength Indication (RSSI) and the limits of the Golden Receive Power Range for a Connection Handle to another BR/EDR Controller. The Connection_Handlemust be a Connection_Handle for an ACL connection. Any positive RSSI value returned by the Controller indicates how many dB the RSSI is above the upper limit, any negative value indicates how many dB the RSSI is below the lower limit. The value zero indicates that the RSSI is inside the 20 dB-wide Golden Receive Power Range. The accuracy of the dB values will depend on the Bluetooth hardware. The only requirements for the hardware are that the BR/EDR Controller is able to tell whether the RSSI is inside, above or below the Golden Device Power Range. The RSSI measurement compares the received signal power with two threshold levels, which define the Golden Receive Power Range. The lower threshold level corresponds to a received power between -56 dBm and 6 dB above the actual sensitivity of the receiver. The upper threshold level is 20 dB above the lower threshold level to an accuracy of +/- 6 dB. The meaning of the RSSI metric is an absolute receiver signal strength value in dBm to $\pm$ 6 dBm accuracy. If the RSSI cannot be read, the RSSI metric is set to 127. (When the Read_RSSI command has completed, a Command Complete event is generated.)

**Read Transmit Power Level Command**

The Read Transmit Power Level command will read the values for the Transmit Power Level parameter for the specified Connection_Handlefor data communication packets during the connection phase, in a range of -30 to +20 dBm.

**C. Touch-to-Select in Bluetooth Technology**

The Bluetooth Touch-to-select feature employs Received Signal Strength Indication (RSSI) information calculated from the FHS packet, which is used in determining that an inquiry scanning device is within "touch range", i.e. proximate or in close proximity of the inquiring device, and when a threshold for that close proximity is met. This may provide an "intent to share" or "touch to connect" feature.

The inquiring device may measure the signal strength (e.g., RSSI) of each response message from an inquiry scanning device, which may be used in ordering the responding devices. In this manner, the inquiry scanning device with the highest measured signal strength is listed first (e.g., wherein the measured signal strength may correlate to the distance between the inquiring device and the responding inquiry scanning device).

An inquiry scanning device receiving inquiry packets from an inquiring device may respond by transmitting an inquiry response FHS packet or an FHS packet followed by an EIR packet. The host in the inquiring device may recognize EIR events triggered by the responses. The reported EIR events may include RSSI measurement values made by the inquiring device on the received FHS packets. From the RSSI values, the host in the inquiring device may detect when an inquiry scanning device is most likely within "touching range", that is within a distance from the inquiring device that indicates touching-related operations may be executed.

It may also be possible to determine when an inquiry scanning device is moving closer to an inquiring device. The Bluetooth controller in the inquiring device may report the receipt of FHS and/or EIR inquiry responses to its host software stack as an HCI Inquiry Event that may contain the measurement of the RSSI performed on the received response. In instances where EIR responses are received, the Bluetooth controller in the inquiring device may report each received EIR as an HCI Extended Inquiry Result Event. When an inquiry scanning device moves closer to an inquiring device, the Bluetooth controller in the inquiring device may report an RSSI for each inquiry response, thereby enabling the inquiring device to track the changing RSSI levels of the scanning device and thus its relative movement. When the measured RSSI satisfies predetermined response criteria (e.g., including the RSSI being measured to be at or above a predetermined level), the corresponding scanning device may be selected for touch-related operations (e.g., expedited connection establishment).

The Bluetooth controller in an inquiring device reports the receipt of inquiry responses to its host, which also has Touch selection software running. Typical response criteria may include RSSI values measured on the responses, being sensed above certain fixed threshold value, such as -30dBm. Sensing a response packet having an RSSI of -30dBm will then cause the Touch selection software in the inquiring device to trigger device selection, while an RSSI of -31dBm will not. It may also be possible that responding inquiry scanning devices may send Tx power information in EIR packet, since this is an existing feature in the Bluetooth specification v4.0. In instances where Tx power information about the inquiry scanning device is available in the EIR packet, the predetermined response criteria may include an adjustable RSSI threshold value that accounts for variations in the Tx power. For example, the threshold value may be set at 30dBm below the EIR Tx power, so that if the Tx power level in an FHS packet is +20dBm then the threshold value that will trigger selection may be the FHS packet being measured at -10dBm, or 30dBm below of Tx power level. Secondly, to ensure that devices are maintained in close proximity, the predetermined response criteria may require that more than one EIR must have a sensed RSSI at or above a threshold value. In addition different thresholds may be used for different phases, for example, first the threshold value may be set above -45dBm to select one or more candidate devices and then a second, more decisive threshold value may be set above -30dBm.

The detected RSSI may also be a function of: [1] antenna location of the inquiry scanning device sending the signal and [2] antenna location of the inquiring device sensing the signal. The results may be improved if the antennas were brought into close proximity, which may require moving away from obstructions and changing the orientation of one or both devices.

## D. Bluetooth™ Low Energy (LE) Technology

The Bluetooth™ Core Specification, Version 4.0 includes the Bluetooth LE protocol for products that require lower power consumption, lower complexity, and lower cost than would be possible using the BR/EDR protocol. Bluetooth LE is designed for applications requiring lower data rates and shorter duty cycles, with a very-low power idle mode, a simple device discovery, and short data packets. Bluetooth LE devices may employ a star topology, where one device serves as a master for a plurality of slave devices, the master dictating connection timing by establishing the start time of the first connection event and the slave devices transmitting packets only to the master upon receiving a packet from the master. According to Bluetooth LE communication protocol all connections are point-to-point connections between two devices (the master and the slave).

The Bluetooth LE protocol allows a star network topology in connections, where one device serves as a master for a plurality of slave devices. The master device dictates the connection timing and communication operations of the one or more slave devices. Bluetooth LE communicates over a total of 40 RF channels, each having a bandwidth of 2 MHz. Data communication between Bluetooth LE devices occurs in 37 pre-specified data channels, of the 40 RF channels. All data connection transmissions occur in connection events wherein a point-to-point connection is established between the master device and a slave device. In the Bluetooth LE protocol, a slave device provides data through Bluetooth LE communication to the master device to which it is connected. The remaining 3 channels, of the 40 RF channels, are advertising channels used by devices to advertise their existence and capabilities. The Bluetooth LE protocol defines a unidirectional connectionless broadcast mode on the advertising channels.

The Link Layer provides a state machine with the following five states: Standby State, Advertising State, Scanning State, Initiating State, and Connection State. The Link Layer state machine allows only one state to be active at a time. The Link Layer in the Standby State does not transmit or receive any packets and can be entered from any other state. The Link Layer in the Advertising State will be transmitting advertising channel packets and possibly listening to and responding to responses triggered by these advertising channel packets. A device in the Advertising State is known as an advertiser. The Advertising State can be entered from the Standby State. The Link Layer in the Scanning State will be listening for advertising channel packets from devices that are advertising. A device in the Scanning State is known as a scanner. The Scanning State can be entered from the Standby State. The Link Layer in the Initiating State will be listening for advertising channel packets from a specific device and responding to these packets to initiate a connection with that specific device. A device in the Initiating State is known as an initiator. The Initiating State can be entered from the Standby State. The Connection State of the Link Layer may be entered either from the Initiating State or the Advertising State. A device in the Connection State is known as being in a connection over a data channel. Within the Connection State, two roles are defined: the Master Role and the Slave Role. When a device in the Initiating State, enters the Connection State, it is in the Master Role, it exchanges data packets with a slave device in a data channel, and it defines the timings of transmissions. When a device in the Advertising State, enters the Connection State, it is in the Slave Role and exchanges data packets with a master device in a data channel, wherein the master device defines the timings of transmissions.

The Bluetooth LE radio operates in the unlicensed 2.4 GHz ISM band, in the same manner as does the Basic Rate / Enhanced Data Rate (BR/EDR) radio. Bluetooth LE supports very short data packets, from 10 octets to a maximum of 47 octets, giving it a low duty cycle. Bluetooth LE employs a frequency hopping transceiver with many frequency hopping spread spectrum (FHSS) carriers, with a bit rate of 1 Megabit per second (Mb/s).

Bluetooth LE employs two multiple access schemes: Frequency division multiple access (FDMA) and time division multiple access (TDMA). Forty (40) physical channels, separated by 2 MHz, are used in the FDMA scheme. Three (3) are used as advertising channels and 37 are used as data channels. A TDMA based polling scheme is used in which one device transmits a packet at a predetermined time and a corresponding device responds with a packet after a predetermined interval.

The physical channel is sub-divided into time units known as events. Data is transmitted between Bluetooth LE devices in packets that are positioned in these events. There are two types of events: Advertising and Connection events.

Devices that transmit advertising packets on the advertising Physical Layer (PHY) channels are referred to as advertisers. Devices that receive advertising on the advertising channels without the intention to connect to the advertising device are referred to as scanners. Devices that form a connection to another device by listening for connectable advertising packets, are referred to as initiators. Transmissions on the advertising PHY channels occur in advertising events.

In the Bluetooth™ Core Specification, Version 4.0, there are four advertising event types: connectable undirected advertising (ADV_IND), connectable directed advertising (ADV_DIRECT_IND), scannable undirected advertising (ADV_SCAN_IND), and non-connectable undirected advertising (ADV_NONCONN_IND). At the start of each advertising event, the advertiser sends an advertising packet corresponding to the advertising event type. The header of the advertising channel packet identifies the packet type in a four-bit PDU Type field encoding. There are seven values currently assigned to the four-bit PDU Type field, ranging from 0000 to 0110, with the values 0111 to 1111 being reserved for future use.

The scanner device, also referred to as the initiator device, that receives the advertising packet, may make a connect request (CONNECT_REQ) to the advertiser device on the same advertising PHY channel. The CONNECT_REQ request includes fields for access address AA, CRC, WinSize, WinOffset, Interval, Latency, Timeout, ChannelMap, Hop count, and sleep clock accuracy SCA. The four-bit PDU Type field in the header of the CONNECT_REQ advertising channel packet, is 0101. When the advertiser device accepts the CONNECT_REQ request, a point-to-point connection results between the scanner/initiator device that becomes the master device, and the advertiser device that becomes the slave device in a piconet. The master and the slave devices know at what time and in which frequency the connection is in operation. The data channel changes between every connection event and the start of connection events are spaced regularly with the connection interval that is provided in the CONNECT_REQ packet.

In the connectable undirected advertising (ADV_IND) channel packet, the ADV_IND PDU has a payload field containing AdvA and AdvData fields. The AdvA field contains the advertiser's public or random device address and the AdvData field may contain Advertising data from the advertiser's host. The PDU may be used in connectable undirected advertising events. The four-bit PDU Type field in the header of the ADV_IND advertising channel packet, is 0000.

In the connectable directed advertising (ADV_DIRECT_IND) channel packet, the ADV_DIRECT_IND PDU has the payload field containing AdvA and InitA fields. The AdvA field contains the advertiser's public or random device address. The InitA field is the address of the device to which this PDU is addressed. The InitA field may contain the initiator's public or random device address. The PDU may be used in connectable directed advertising events. This packet may not contain any host data. The four-bit PDU Type field in the header of the ADV_DIRECT_IND advertising channel packet, is 0001.

In a non-connectable undirected event type advertising channel packet, ADV_NONCONN_IND, a scanner device is allowed to receive information in the advertising channel packet, but scanner devices are not allowed to transmit anything in the advertising channels upon receiving the ADV_NONCONN_IND advertising channel packets. When the non-connectable undirected event type is used, non-connectable advertising indications ADV_NONCONN_IND packets are sent by the Link Layer. The non-connectable undirected event type allows a scanner to receive information contained in the ADV_NONCONN_IND from the advertiser. The advertiser may either move to the next used advertising channel index or close the advertising event after each ADV_NONCONN_IND that is sent. The four-bit PDU Type field in the header of the ADV_NONCONN_IND advertising channel packet, is 0010.

In the scannable undirected advertising (ADV_SCAN_IND) channel packet, the ADV_SCAN_IND PDU has the payload field containing AdvA and AdvData fields. The AdvA field contains the advertiser's public or random device address. The PDU may be used in scannable undirected advertising events. The AdvData field may contain Advertising Data from the advertiser's host. The four-bit PDU Type field in the header of the ADV_SCAN_IND advertising channel packet, is 0110.

In the Bluetooth™ Core Specification, Version 4.0, if the advertiser is using a connectable advertising event, an initiator may make a connection request using the same advertising PHY channel on which it received the connectable advertising packet. The advertising event is ended and connection events begin if the advertiser receives and accepts the request for a connection to be initiated. Once a connection is established, the initiator becomes the master device in a piconet and the advertising device becomes the slave device. Within a connection event, the master and slave alternate sending data packets using the same data PHY channel.

According to the Bluetooth Specification V4.0, Bluetooth LE device discovery involves different operational processes for devices with different roles. In particular:

- Slave Device, being an advertiser, performs an advertising process during which the device repeatedly enters Advertising Events. The interval of each start of Advertising Event, Ta, composes of a fixed-length "advInterval" and a random-length "advDelay". In Advertising Event, the device sends advertising Packet Data Units (PDUs) in broadcasting channel 37, 38 and 39, respectively.

- Master Device, being an initiator/scanner, performs the initiating/scanning process. An initiating/scanning process consists of repeated "scanInterval", each of which contains a "scanWindow". In a different "scanWindow", the device changes the RF module to receive the state and listens to advertising PDUs on different broadcasting channels; while out of the "scanWindow", it does routine scheduling, or turns off the RF module.

If any advertising PDU is received by an initiator / scanner, it means the initiator / scanner successfully discovers the advertising device. For the initiator, it can directly send back a "CONN_REQ" to establish a connection with that advertiser. For a scanner, it can send out a "SCAN_REQ" to ask for more information from that advertiser.

Example non-limited use cases for Bluetooth LE technology include sports and fitness, security and proximity and smart energy. Bluetooth LE technology is designed for devices to have a battery life of up to one year such as those powered by coin-cell batteries. These types of devices include watches that will utilize Bluetooth LE technology to display Caller ID information and sports sensors that will be utilized to monitor the wearer's heart rate during exercise. The Medical Devices Working Group of the Bluetooth SIG is also creating a medical devices profile and associated protocols to enable Bluetooth applications for Bluetooth LE devices.

A Bluetooth LE advertising channel may be shared by any number of Bluetooth LE devices. Any number of Bluetooth LE devices may transmit advertising packets while sharing the same three advertising PHY channels. In high-density environments, however, since there are a large number of nodes to be discovered, the probability of broadcasting conflict will inevitably increase, causing network access time to increase, and also lowering the energy efficiency of the whole network.

### 1. Bluetooth™ RSSI

The received signal strength indicator (RSSI) is a measurement of the power present in a received radio signal. Bluetooth receiver circuits may include an RSSI detector circuit to measure the strength of an incoming signal and generate an output representing the signal strength. For example, the received RF signal may be amplified and downconverted to an intermediate frequency (IF); then channel selection is performed on the IF signal, and the power of the IF signal in the selected channel is measured as the receiver signal strength indicator (RSSI) value. If the Bluetooth receiver circuit supports RSSI, the accuracy may be +/- 6 dBm or better.

### RSSI Monitoring of Bluetooth LE Packets

During Bluetooth discovery in Bluetooth LE, before a connection is created, the RSSI may be measured from advertising packets received in broadcasting channel 37, 38, or 39, when they are received by a scanning device, if enabled by the host.

When the controller receives an advertising packet, an HCI LE Advertising Report event is sent by the controller to the host application. The HCI LE Advertising Report event indicates that a Bluetooth device or multiple Bluetooth devices have been detected during an active scan or during a passive scan. The HCI LE Advertising Report event includes a parameter N that indicates the RSSI of the received packet, with N being one octet representing the magnitude of the RSSI, with a range in units of dBm of -127 ≤ N ≤ +20. This event will be sent from the Controller to the Host as soon as an advertising packet from a remote device is received. The RSSI parameter is measured during the receipt of the advertising packet. This event contains RSSI and advertising packet data for the remote device.

**RSSI Monitoring of Data Packets Received Over a Connection**

After the discovery phase is completed, once a Bluetooth LE device is connected to another Bluetooth device, the received signal strength indication (RSSI) may be used by a receiving device to monitor the received power level of the data communication packets received over the connection. The RSSI value is calculated from received packet in the Bluetooth physical layer, and may be read by the host application for example through the host controller interface (HCI) Read RSSI command, for example once per second.

The Read RSSI Command will read the value of the received signal strength indication (RSSI) for data communication packets received over the connection to another Bluetooth LE controller. The RSSI value is referenced with respect to a Connection_Handlethat identifies the connection and is assigned when the connection is created. The Connection_Handle is used by the Bluetooth controller to determine which set of buffers to use and the logical link over which the data is to be sent.

**Measuring Pathloss with the RSSI and the TX Power Level**

The TX Power Level data field in the Bluetooth LE advertising packet indicates the transmitted power level of the advertising packets at the transmitter of the sending device. The TX Power Level is reported to the host in response to the HCI LE Read Advertising Channel Tx Power Command. The TX Power Level data field may be used to calculate path loss of a received packet when the receiving device measures the RSSI of the received advertising packet, using the following equation:

$$pathloss = \text{Tx Power Level} - \text{RSSI of the inquiry response packet}$$

For example, if Tx Power Level = +4 (dBm) and the RSSI on the received packet is -60 (dBm) then the total pathloss is +4 - (-60) = +64 dB. If a second packet were received at -40dBm with a Tx Power Level data = +15dBm. the resulting pathloss would be +55dB. An application may use these pathloss values to choose which device it thinks might be closer (the one with the lower pathloss value).

Unfortunately, due to fading and varying antenna, circuit, and chip characteristics, these resulting pathloss values may have some uncertainty. Some of the uncertainty (for example, due to fading) may be able to be alleviated if multiple packets are received from the same device.

**2. Bluetooth™ Host Controller Interface**

The Bluetooth™ radio in a device may include the host controller interface that provides a command interface between the host application in the device and the link layer of the Bluetooth™ radio, also referred to as the controller, to enable access to hardware status and control registers of the Bluetooth™ radio.

The host controller interface (HCI) is described in the Bluetooth™ Core 4.0 Specification. The Host will receive asynchronous notifications of HCI events from Host Controller Transport Layer. HCI events are used for notifying the Host when something occurs. When the Host discovers that an event has occurred, it will then parse the received event packet to determine which event occurred. The commands and events are sent between the Host and the Controller. These are grouped into logical groups by function.

The HCI provides a command interface between the host application in a device and the Bluetooth™ link layer, provides access to hardware status and control registers of the Bluetooth™ radio, and provides a uniform method of accessing the Bluetooth™ baseband capabilities.

**Discovery Phase HCI Commands And Events**

**HCI LE Advertising Report Event**

The Bluetooth LE device discovery group of commands and events allow a device to discover other devices in the surrounding area. The Bluetooth LE host controller interface includes the HCI LE Advertising Report event that indicates that a Bluetooth device or multiple Bluetooth devices have been detected during an active scan or during a passive scan.

## Connection Phase HCI Commands and Events

### HCI LE Read Advertising Channel Tx Power Command

The TX Power Level is reported to the host in response to the HCI LE Read Advertising Channel Tx Power Command. The TX Power Level data field may be used to calculate path loss of a received packet when the receiving device measures the RSSI of the received advertising packet.

After the discovery phase is completed, once a Bluetooth device is connected to another Bluetooth device, the received signal strength indication (RSSI) may be used by a receiving device to monitor the received power level of the data communication packets received over the connection. The RSSI value is calculated by the Bluetooth physical layer, and may be read by the host application through the host controller interface (HCI) Read RSSI command.

The Read RSSI command will read the value of the received signal strength indication (RSSI) for data communication packets received over the connection to another Bluetooth controller. The RSSI value is referenced with respect to a Connection_Handle that identifies the connection and is assigned when the connection is created. The Connection_Handleis used by the Bluetooth controller to determine which set of buffers to use and the logical link over which the data is to be sent.

The RSSI parameter in the Read RSSI command is a signed 8-bit value, and is interpreted as an indication of arriving signal strength at the antenna measured in dBm. This command reads the Received Signal Strength Indication (RSSI) value from the Controller. For Bluetooth LE transport, a Connection_Handleis used as the Handle command parameter and return parameter. The meaning of the RSSI metric is an absolute receiver signal strength value in dBm to $\pm$ 6 dBm accuracy.

### 3. Bluetooth LE Proximity Profile

The Proximity Profile defines the behavior when a device moves away from a peer device so that the connection is dropped or the path loss increases above a preset level, causing an immediate alert. This alert may be used to notify the user that the devices have become separated. As a consequence of this alert, a device may take further action, for example to lock one of the devices so that it is no longer usable.

The Proximity Profile may also be used to define the behavior when the two devices come closer together such that a connection is made or the path loss decreases below a preset level.

The Proximity Profile defines two profile roles to enable devices to detect their proximity: the Proximity Reporter and the Proximity Monitor. The Proximity Reporter is a Generic Attribute Profile (GATT) server on the one device in the connection, which supports a Link Loss Service (mandatory), an Immediate Alert Service (optional), and a transmit (Tx) Power Service (optional). The Proximity Monitor is a GATT client on the peer device in the connection, which monitors the Radio Signal Strength Information (RSSI) of the connection to calculate the signal's path loss. The Proximity Monitor may use the information received from the Proximity Reporter's Tx Power Service to normalize the RSSI value, by subtracting the RSSI from the Tx Power Level. In order to trigger an alert on low RSSI, the Proximity Monitor constantly monitors RSSI.

The Proximity Monitor on one device may maintain a connection with the Proximity Reporter on the peer device and monitor the RSSI of this connection. The Proximity Monitor may calculate the path loss by subtracting the RSSI from the transmit power level of the device of the Proximity Reporter, as discovered using the Reading Tx Power procedure. If the path loss exceeds a threshold set on the Proximity Monitor, it may write in the Alert Level characteristic of the Immediate Alert service, using the GATT Write Without Response sub-procedure, to cause the Proximity Reporter to generate an alert. The Proximity Monitor may also generate an alert when the path loss exceeds the threshold. The duration of the alert may be implementation specific.

The Proximity Monitor specified in the Bluetooth Proximity Profile, may include the following functions:

Service Discovery from the peer device;

Characteristic Discovery from the peer device;

Configuration of Alert on Link Loss to the peer device;

Alert on Link Loss to the peer device;

Reading Tx Power from the peer device; and

Alert on Path Loss locally and to the peer device based on RSSI supervision.

If the path loss falls below a threshold set on the Proximity Monitor it may write in the Alert Level characteristic of the Immediate Alert service, using the GATT Write Without Response sub-procedure, to cause the Proximity Reporter to end the alert. When the path loss is below the threshold the Proximity Monitor should stop alerting.

If link loss occurs during this procedure, then the behavior defined in the Alert on Link Loss procedure may be used.

## E. Seamless Audio Switching

It would be desirable to be to automatically connect a smart phone or other wireless device to the closest device or service. As an example use case, it is enjoyable to listen to music easily wherever the listener moves. In accordance with an example embodiment of the invention, music may be automatically distributed and switched between different audio output devices so that the sound is played by the closest audio device. In accordance with an example embodiment of the invention, short-range communication, such as the Bluetooth communication protocol, may be automatically distributed and switched between different wireless devices based on the proximity of the wireless device. In accordance with an example embodiment of the invention, an internal Touch-to-Select (T2S) principle enables Bluetooth devices to select a counterpart device for communication using a device selection scheme where the communication counterpart is selected based on a determined distance between the devices.

In accordance with an example embodiment of the invention, dedicated device discovery is employed during a service a connection, where a device monitors the signal strength of multiple devices while in a service communication session with a counterpart device, and automatically switches its service connection between devices based on measured signal strengths of the device discovery messages. In accordance with an example embodiment of the invention, while in a communication session with a counterpart device, signal strengths of multiple devices are compared and the existing service connection may be automatically switched to another device that is providing the largest signal strength for its device discovery messages, corresponding to the smallest distance between the devices. In accordance with an example embodiment of the invention, the signal strength of multiple devices may be compared and the existing service connection may be switched to another device that is providing a largest signal strength for its device discovery messages, within a predefined margin to other devices also providing service capabilities. In accordance with an example embodiment of the invention, the switching of a connection may also include a predefined delay before the actual switching occurs between devices, so as to avoid unwanted hysteresis effects during unstable conditions.

Figure 1A is an illustration of an example embodiment of a network in a device discovery phase, with a discovering device 100, such as a smart phone, detecting two wireless device discovery messages 150A and 150B received from two respective wireless devices 102A and 102B, such as audio output devices, for example, speakers or headphones. The discovering device 100 compares a characteristic, such as the RSSI associated with each of the two wireless device discovery messages 150A and 150B. In an example embodiment of the invention, the wireless device discovery messages 150A and 150B may be a Bluetooth™ inquiry response message received in response to an inquiry message transmitted by the discovering device 100. In an example embodiment of the invention, the wireless device discovery messages 150A and 150B may be a Bluetooth™ Low Energy advertising message.

In an example embodiment of the invention, the example network includes a first Bluetooth discovering device 100 receiving one or more inquiry response packets 150A and 150B from one or more Bluetooth wireless devices 102A and 102B, in accordance with at least one embodiment of the present invention. In embodiments of the invention, the discovering device 100 and the inquiry scanning devices 102A and 102B may include a processor 122 that includes from one to many central processing units (CPUs) 124 and 125, a random access memory (RAM) 126, a read only memory (ROM) 127, and interface circuits 128 to interface with one or more radio transceivers 116, antenna 132, battery or house power sources. A smart phone may include a keypad, display 144, etc. A wireless speaker may include an audio output port 144A and 144B. The RAM and ROM can be removable memory devices such as smart cards, SIMs, WIMs, semiconductor memories such as RAM, ROM, PROMS, flash memory devices, etc., as shown in Figure 9. In an example embodiment of the invention, the storage or memory 121 stores a measurement of the characteristic RSSI of received wireless device discovery messages, such as 150A and 150B.

In an example embodiment of the invention, the Bluetooth discovering device 100 may include a host controller interface (HCI) 111 that provides a command interface between the host application 110A in the device and the link layer or MAC 114 and the radio 116, also referred to as the controller, to enable access to hardware status and control registers of the Bluetooth radio 116. The host controller interface (HCI) is described in the Bluetooth™ Core Specification. The Host application 110A will receive asynchronous notifications of HCI events from HCI 111. HCI events are used for notifying the Host application 110A when something occurs. When the Host application discovers that an event has occurred, it will then parse the received event packet to determine which event occurred. The commands and events are sent between the Host application 110A and the radio 116. The HCI 111 provides a command interface between the host application 110A in a device and the Bluetooth link layer or MAC 114, provides access to hardware status and control registers of the radio 116, and provides a uniform method of accessing the Bluetooth baseband capabilities. In an example embodiment of the invention, the MAC 114 may be the Bluetooth basic rate/enhanced data rate (BR/EDR) protocol, the Bluetooth Low Energy (LE) protocol, or both protocols.

In an example embodiment of the invention, the inquiry scanning device 102A and 102B outputs Bluetooth protocol data units (PDU) or packets, such as inquiry response packets 150A and 150B, for normal Bluetooth transmission. During normal Bluetooth transmission, the RF signal is transmitted by the antenna 170A and 170B.

In an example embodiment of the invention, the discovering device 100 and inquiry scanning device 102A and 102B may be, for example, a miniature device such as a key fob, smart card, jewelry, or the like. In an example embodiment of the invention, the discovering device 100 and inquiry scanning device 102A and 102B may be, for example, a relatively larger cell phone, smart phone, flip-phone, PDA, graphic pad, or even larger devices such as a laptop computer, desktop computer, kitchen appliance, such as a refrigerator, an automobile dashboard, and the like. In embodiments, the relative sizes of devices 100, 102A and 102B may be arbitrary, either one of the devices may be either mobile or fixed-base.

Figure 1B is an illustration of an example embodiment of the network of Figure 1A, wherein the discovering device 100 is in a first position relative to the two wireless devices 102A and 102B, selects one of the two wireless devices, 102A, for communication 176A, whose characteristic RSSI of its received wireless device discovery message 150A satisfies a predefined criterion, such as a predefined threshold value. The discovering device 100 measures and stores the characteristic RSSI of the received wireless device discovery message 150A in memory 121, which satisfies the predefined criterion, in accordance with at least one embodiment of the present invention. The device 100 keeps on tracking the RSSI of the connected device 102A from discovery messages 150A and updates the stored value respectively.

Figure 1C is an illustration of an example embodiment of the network of Figure 1B, wherein the discovering device 100 has moved closer to the wireless device 102B. The discovering device 100 detects another wireless device discovery message 150B' from the sending wireless device 102B, while communicating with the selected wireless device 102A, in accordance with at least one embodiment of the present invention. The device 100 keeps on tracking the RSSI of the connected device 102A from discovery messages 150A and updates the stored value respectively.

Figure 1D is an illustration of an example embodiment of the network of Figure 1C, wherein the discovering device 100 has moved to the second position relative to the two wireless devices 102A and 102B. The discovering device 100 compares a characteristic RSSI associated with the new wireless device discovery message 150B', with the measured and stored characteristic RSSI of the received wireless device discovery message 150A that satisfied the predefined criterion. The discovering device 100 selects the sending wireless device 102B for communication 176B, based on the comparison. For example, the RSSI of new message 150B' is greater than the stored RSSI characteristic of previous message 150A that satisfied the predefined criterion, in accordance with at least one embodiment of the present invention.

Figure 2A is an illustration of an example embodiment of a wireless network of a smart phone discovering device 100 moving in the vicinity of two wireless speakers 102A and 102B, and transferring its wireless audio signal to each respective speaker to which it passes closest, in accordance with at least one embodiment of the present invention.

In an example embodiment of the invention, device 100 is performing inquiry. The inquiry results are filtered according to known (paired) audio devices (Speaker 102A and 102B in here). At the beginning the speaker which is providing highest signal strength (being closest to Device 100) is selected (Speaker 102A) and Device 100's audio stream is transmitted to speaker 102A. Device 100 continues to perform inquiry and filters the results according to known audio devices. Here also Speaker 102A inquiry results are memorized. When Device 100 detects that Speaker 102B's signal strength is higher than Speaker 102A, Device 100 switch audio from Speaker 102A to Speaker 102B. It may be required that there are certain margin between Speaker 102A and Speaker 102B signal strength (e.g. Speaker 102B signal strength is 10dB higher that Speaker 102A until switch occurs). Alternatively, or in addition there might be certain time duration when Speaker 102B's signal is higher than Speaker 102A's signal before audio is switched between the devices.

Figure 2B is an illustration of an example embodiment of a wireless network of a smart phone discovering device 100 moving in the vicinity of a wireless speaker 102A and a wireless headset 102B, and transferring its wireless audio signal from the speaker 102A to the headset 102B that it passes closest, in accordance with at least one embodiment of the present invention. The figure shows the use case is where Device 100 is connected to Speaker 102A and user leaves and takes Headset with him. Now Device 100 notices that paired Headset soon has stronger signal than Speaker 102A and Device 100 switches the audio to the Headset.

Figure 3 is an illustration of an example embodiment of a wireless network of a smart phone discovering device 100 detecting that it is close to a first speaker 102A and farther from a second speaker 102B, and in response transmitting monaural signals to the closest speaker, in accordance with at least one embodiment of the present invention. Figure 4 is an illustration of an example embodiment of a wireless network of the smart phone discovering device 100 in Figure 3, detecting that is approximately equally as close to both the first 102A and second 102B speakers, and in response, transmitting stereo audio signals to the two respective speakers 102A and 102B, in accordance with at least one embodiment of the present invention.

In an example embodiment of the invention, the speaker 102A and/or 102B may detect and measure themselves and form a stereo pair when they are close to each other or set themselves as individual speakers when they are farther away. The figure shows situation where speakers 102A and 102B are far away from each other and they are operating as individual audio sinks. When they are brought close to each other they are automatically combined as one stereo speaker pair, as shown in Figure 4.

Figure 5 is an illustration of an example embodiment of a wireless network of a smart phone discovering device 100, detecting that is approximately equally close to both a first 102A and a second 102B speaker, and in response, transmitting left-channel stereo audio signals to the first speaker 102A and right-channel stereo audio signals to the second speaker 102B, in accordance with at least one embodiment of the present invention. Figure 6 is an illustration of an example embodiment of the wireless network of the smart phone discovering device 100 of Figure 5, but which is moving away from the first speaker 102A and closer to a third speaker 102C, detecting that is approximately equally close to the second speaker 102B and the third speaker 102C, and in response, transmitting left-channel stereo audio signals to the second speaker 102B and right-channel stereo audio signals to the third speaker 102C, in accordance with at least one embodiment of the present invention. The figure shows the case where Left and Right audio channels can be delivered to speakers separately, In here Device 100 starts moving towards Room B first Speaker 102A is as Left speaker and Speaker 102B is as Right speaker, when close to Room B the Room B Speaker C is used as Right speaker and Speaker 102B as Left speaker and finally Speaker C is as Left speaker and Speaker D as Right speaker. In an example embodiment of the invention, in case only of the two devices is detected, device 100 mixes the Left and Right signals into a single stream and transmits it into a single speaker.

Figure 7 is an illustration of an example flow diagram of an example process in the discovering device 100 carrying out the example operations shown in Figures 1A to 1D, in accordance with at least one embodiment of the present invention. In step 702, when the application, or an audio playing process, is started, the device 100 performs discovery A. In this discovery, Device 100 is searching for certain kind of devices, e.g. paired audio sinks in step 704. This discovery is run for certain time to find a device (speaker) 102A or 102B that has the strongest device discovery message signal, in step 706. When that device 102A is selected, Device 100 switches audio to that device 102A in step 708, e.g. by creating an A2DP connection to the device 102A and switching audio from internal audio sink to A2DP audio sink. When Device 100 has connected the audio to external device 102A, it will start discovery process B in step 710. In this process Device 100 searches for any other audio device (preferably paired devices). The device 100 keeps on tracking the RSSI of the connected device 102A from discovery messages 150A and updates the stored value respectively. When Device 100 finds that kind of device 102B, it will compare the device RSSI with some criteria with stored RSSI for device 102A. Device 100 may measure the existing connection with same means e.g. by performing discovery, even though Device 100 has an existing connection with that device 102A. This will ensure that measurement accuracy is at the same level. When another device 102B is found that fulfills some criterion (RSSI, service etc.) in step 712, then Device 100 will switch audio to that device 102B in step 714 and start discovery B again. In switching phase, it is possible to perform speaker combinations as in Figure 4.

Figure 8A is an illustration of an example flow diagram 800 of an example process in the discovering device 100 carrying out the example operations, in accordance with at least one embodiment of the present invention. The figure shows an example embodiment of the invention, of the example process in the discovering device 100 in accordance with at least one embodiment of the present invention. The steps of the flow diagram 800 represent computer code instructions stored in the RAM and/or ROM memory of the device 100, which when executed by the central processing units (CPU) 124 and/or 125, carry out the functions of the example embodiments of the invention. The steps may be carried out in another order than shown and individual steps may be combined or separated into component steps. The flow diagram has the following steps:

Step 802: scanning, by an apparatus, for wireless messages associated with presence of other wireless devices including a first wireless device to which the apparatus is connected over a wireless connection;

Step 804: maintaining, by the apparatus, measured signal strength of wireless messages received from the connected first wireless device;

Step 806: detecting, by the apparatus, a second wireless message from a second wireless device, while connected to the first wireless device;

Step 808: comparing, by the apparatus, a measured signal strength of the second wireless message, with the maintained signal strength associated with the first wireless device; and

Step 810: switching, by the apparatus, the connection from the first wireless device to the second wireless device when the measured signal strength of the second wireless message is greater than the maintained signal strength associated with the first wireless device.

Figure 8B is an illustration of an example flow diagram 850 of an example process in the wireless device 102A, such as a speaker, carrying out the example operations, in accordance with at least one embodiment of the present invention. The figure shows an example embodiment of the invention, of the example process in the wireless device 102A in accordance with at least one embodiment of the present invention. The steps of the flow diagram 850 represent computer code instructions stored in the RAM and/or ROM memory of the device 102A, which when executed by the central processing units (CPU) 124 and/or 125, carry out the functions of the example embodiments of the invention. The steps may be carried out in another order than shown and individual steps may be combined or separated into component steps. The flow diagram has the following steps:

Step 852: establishing, by an apparatus, a wireless connection with a first wireless device;

Step 854: transmitting, by the apparatus, wireless messages indicating its presence while being connected with the first wireless device; and

Step 856: relinquishing, by the apparatus, the connection with the first wireless device in response to receiving a disconnect from the first wireless device.

Figure 9 illustrates an example embodiment of the invention, wherein examples of removable storage media 126 are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.

In an example embodiment of the invention, in Figure 1A, the wireless device discovery messages 150A and 150B may be Bluetooth Low Energy advertising messages received from the two respective wireless devices 102A and 102B, such as audio output devices, for example, speakers or headphones. The discovering device 100 measures the RSSI associated with each of the two Bluetooth Low Energy advertising messages 150A and 150B. In an alternate example embodiment of the invention, the discovering device 100 may detect any Bluetooth Low Energy data channel messages 150A and 150B (not necessarily an advertising message) from the two respective wireless devices 102A and 102B. In the alternate example embodiment, the discovering device 100 measures the RSSI associated with each of the two Bluetooth Low Energy data channel messages 150A and 150B.

In an example embodiment of the invention, in Figure 1B, the discovering device 100 is in a first position relative to the two wireless devices 102A and 102B, selects one of the two wireless devices, 102A, for communication 176A, whose characteristic RSSI of its received Bluetooth Low Energy advertising message 150A satisfies a predefined criterion, such as a predefined threshold value. In example embodiments, the discovering device 100 may, in addition, base its selection on the identity or Bluetooth address of the device 102A or other information contained in the advertising message. The discovering device 100 measures and stores the characteristic RSSI of the received Bluetooth Low Energy advertising message 150A in memory 121. In an example embodiment of the invention, in Figure 1C, while the discovering device 100 is actively connected and communicating with the wireless device 102A using the Bluetooth Low Energy protocol, the discovering device 100 moves closer to the wireless device 102B. The device 100 keeps on tracking the RSSI of the connected device 102A from discovery messages 150A and updates the stored value respectively. The discovering device 100 detects another Bluetooth Low Energy advertising message 150B' from the sending wireless device 102B, in addition to the discovery messages 150A, while communicating with the selected wireless device 102A. In an example embodiment of the invention, in Figure 1D, the discovering device 100 has moved to the second position relative to the two wireless devices 102A and 102B. The discovering device 100 compares a characteristic RSSI associated with the new Bluetooth Low Energy advertising message 150B', with the measured and stored characteristic RSSI of the received Bluetooth Low Energy advertising message 150A that satisfied the predefined criterion.

In an alternate example embodiment of the invention, the discovering device 100 detects any Bluetooth Low Energy data channel message 150B' (not necessarily an advertising message) from the sending wireless device 102B, while communicating with the selected wireless device 102A. In this alternate example embodiment, the discovering device 100 compares a characteristic RSSI associated with the new Bluetooth Low Energy data channel message 150B', with a measured and stored characteristic RSSI of a previously received Bluetooth Low Energy data channel message 150A (not necessarily an advertising message) that satisfied a predefined criterion.

The discovering device 100 selects the sending wireless device 102B for communication 176B, based on the comparison. For example, the RSSI of new message 150B' is greater than the stored RSSI characteristic of previous message 150A that satisfied the predefined criterion.

In an example embodiment of the invention, for the discovery operation A and B, Bluetooth Low Energy (BLE) may be used, i.e. discovery is done with BLE and the actual audio connection is done with legacy Bluetooth. In this case, the speaker 102A and 102B advertises itself over BLE (preferably with no connectable mode). The BLE addressing utilizes a public address or otherwise reveals the speaker identity, so that when device 100 is doing BLE scanning, it recognizes the found unit to be a speaker with a certain identity (the Bluetooth address), so that device 100 can create a connection to that specific speaker 102A or 102B.

In an example embodiment of the invention, when the speaker 102A or 102B is powered on, it will start to advertise itself over BLE. This BLE advertising may contain information of the speaker (e.g. Bluetooth service type) in the advertisement field. Every speaker 102A and 102B may have its own identity so that device 100 may match this information with the Bluetooth address. This information may be:

Public address (BLE address is the same as Bluetooth address);

UUID for this specific device (which can be matched to Bluetooth address);

UUID containing Bluetooth address, e.g. first part is speaker specific, second part is BT address.

In an example embodiment of the invention, the device 100 is scanning the speaker 102A and 102B with BLE, just as it does in the discovery in Figure 7, however device 100 may perform both Bluetooth inquiry and BLE scanning, depending on the speakers (or other units) that the device 100 would like to find.

The signal strength of the scanned unit 102A and 102B may be obtained directly from the advertisement reports and that may be compared, just as shown in Figure 7.

In an example embodiment of the invention, for the speaker 102A and 102B to be visible and easily discoverable, a certain configuration may be performed. The speaker may use a longer time for scanning inquiry and page messages as well as a shortened scanning interval. In addition, interlaced scanning may be used both in inquiry and page scan, to make sure that the discovery B operation in Figure 7 may be fast and reliable.

In an example embodiment of the invention, it is also possible to perform this kind switching process between other gadgets and wearable devices, where the whole process is done with BLE.

In an example embodiment of the invention, when a speaker 102A or 102B is visible, it may be easily connected. It is possible to implement the operation where a Bluetooth speaker is visible, but not accept a new connection (new pairing requests). This may be a typical use case when the speaker is in a standby state or in a connection state. The actual state where a new pairing request may be accepted may be enabled, for example, by the user pushing a power button for 10sec.

In an example embodiment of the invention, there may be several simultaneously active connections to different devices, such as shown in Figure 6. Here, Device 100 may be either mastering both connections, which means that the speakers are just two different slaves in the same piconet. Another case may be where device 100 is the slave and e.g. Speaker 102B is the master. The Speaker 102B, may be the master to Speaker 102C in a scatternet.

Using the description provided herein, the embodiments may be implemented as a machine, process, or article of manufacture by using standard programming and/or engineering techniques to produce programming software, firmware, hardware or any combination thereof.

Any resulting program(s), having computer-readable program code, may be embodied on one or more computer-usable media such as resident memory devices, smart cards or other removable memory devices, or transmitting devices, thereby making a computer program product or article of manufacture according to the embodiments. As such, the terms "article of manufacture" and "computer program product" as used herein are intended to encompass a computer program that exists permanently or temporarily on any computer-usable medium.

As indicated above, memory/storage devices include, but are not limited to, disks, optical disks, removable memory devices such as smart cards, SIMs, WIMs, semiconductor memories such as RAM, ROM, PROMS, etc. Transmitting mediums include, but are not limited to, transmissions via wireless communication networks, the Internet, intranets, telephone/modem-based network communication, hard-wired/cabled communication network, satellite communication, and other stationary or mobile network systems/communication links.

Although specific example embodiments have been disclosed, a person skilled in the art will understand that changes can be made to the specific example embodiments without departing from the scope of the invention.

**Claims**

**1.** A method, comprising:

scanning, by an apparatus, for wireless messages associated with presence of other wireless devices including a first wireless device to which the apparatus is connected over a wireless connection;

maintaining, by the apparatus, measured signal strength of wireless messages received from the connected first wireless device;

detecting, by the apparatus, a second wireless message from a second wireless device, while connected to the first wireless device;

comparing, by the apparatus, a measured signal strength of the second wireless message, with the maintained signal strength associated with the first wireless device; and

switching, by the apparatus, the connection from the first wireless device to the second wireless device when the measured signal strength of the second wireless message is greater than the maintained signal strength associated with the first wireless device.

2. The method of claim 1, wherein switching of the connection from the first wireless device to the second wireless device is performed when the measured signal strength of the second wireless message is greater than the maintained signal strength associated with the first wireless device, by a predefined margin.

3. The method of claim 1, wherein the first and second wireless devices are audio output devices, including at least one of speakers and headphones.

4. A method, comprising:

establishing, by an apparatus, a wireless connection with a first wireless device;

transmitting, by the apparatus, wireless messages indicating its presence while being connected with the first wireless device; and

relinquishing, by the apparatus, the connection with the first wireless device in response to receiving a disconnect from the first wireless device.

5. The method of claim 4, wherein the apparatus is an audio output device, including at least one of speaker and headphone.

6. The method of any of the preceding claims, wherein the wireless messages are at least one of a Bluetooth inquiry response message or a Bluetooth Low Energy advertising message

7. A computer program comprising computer readable program code adapted to perform the method of any of the preceding claims when said program is run on a computer.

8. The computer program according of claim 7, wherein the computer program is a computer program product comprising a computer-readable medium bearing computer program code embodied therein for use with a computer.

9. An apparatus, comprising:

means for scanning for wireless messages associated with presence of other wireless devices including a first wireless device to which the apparatus is connected over a wireless connection;

means for maintaining measured signal strength of wireless messages received from the connected first wireless device;

means for detecting a second wireless message from a second wireless device, while connected to the first wireless device;

means for comparing a measured signal strength of the second wireless message, with the maintained signal strength associated with the first wireless device; and

means for switching the connection from the first wireless device to the second wireless device when the measured signal strength of the second wireless message is greater than the maintained signal strength associated with the first wireless device.

10. The apparatus of claim 9, wherein the wireless messages are at least one of a Bluetooth inquiry response message or a Bluetooth Low Energy advertising message.

11. The apparatus of claim 9, wherein switching of the connection from the first wireless device to the second wireless device is performed when the measured signal strength of the second wireless message is greater than the maintained signal strength associated with the first wireless device, by a predefined margin.

**12.** The apparatus of claim 9, wherein the first and second wireless devices are audio output devices, including at least one of speakers and headphones.

**13.** An apparatus, comprising:

means for establishing a wireless connection with a first wireless device;
means for transmitting wireless messages indicating presence of the apparatus while being connected with the first wireless device; and
means for relinquishing the connection with the first wireless device in response to receiving a disconnect from the first wireless device.

**14.** The apparatus of claim 13, wherein the wireless messages are at least one of a Bluetooth inquiry response message or a Bluetooth Low Energy advertising message.

**15.** The apparatus of claim 13, wherein the apparatus is an audio output device, including at least one of speaker and headphone.

DEVICE 102A
144A
170A
Device Discovery Message
150A

DEVICE 102B
144B
170B
Device Discovery Message
150B

132

DISPLAY 144
APPLICATION 110A
CONTROL INTERFACE 111
MAC 114
RADIO 116

122
CPU 124
CPU 125
CPU 126
CPU 127
INTERFC. CKTS 128

STORAGE 121
RSSI OF SCANS

COMPARE RSSI OF SCANS 150A AND 150B

DEVICE 100

FIG. 1A

FIG. 1B

EP 2 934 030 A1

DEVICE 100
MOVES CLOSER TO
SPEAKER 102B

170A

144A

DEVICE 102A

176A

Communication Connection

Device Discovery Message

150A

DISPLAY 144

122

CPU 124

CPU 125

CPU 126

CPU 127

INTERFC.
CKTS 128

APPLICATION
110A

CONTROL
INTERFACE 111

MAC 114

RADIO 116

132

DEVICE 102B

Device Discovery Message

150B'

170B

144B

STORAGE 121
RSSI OF SCANS

COMPARE STORED
RSSI OF
PRIOR SCAN 150A &
NEW RSSI SCAN 150B'

# FIG. 1C

DEVICE 100

DISPLAY 144

122

CPU 124

CPU 125

CPU 126

CPU 127

INTERFC. CKTS 128

STORAGE 121 RSSI OF PRIOR SCANS

APPLICATION 110A

CONTROL INTERFACE 111

MAC 114

RADIO 116

SELECT SPEAKER 102B WITH LARGER RSSI FOR SCAN 150B'

170A

144A

DEVICE 102A

Device Discovery Message

150A'

132

DEVICE 102B

Communication Connection

176B

170B

144B

FIG. 1D

FIG. 2A

DEVICE 102A    Speaker A

DEVICE 102B

Headset A

Audio    Audio

DEVICE A

DEVICE A

DEVICE 100

FIG. 2B

FIG. 3

FIG. 4

FIG. 5

FIG. 6

FIG. 7

EP 2 934 030 A1

800

| 802 | SCANNING, BY AN APPARATUS, FOR WIRELESS MESSAGES ASSOCIATED WITH PRESENCE OF OTHER WIRELESS DEVICES INCLUDING A FIRST WIRELESS DEVICE TO WHICH THE APPARATUS IS CONNECTED OVER A WIRELESS CONNECTION. |

| 804 | MAINTAINING, BY THE APPARATUS, MEASURED SIGNAL STRENGTH OF WIRELESS MESSAGES RECEIVED FROM THE CONNECTED FIRST WIRELESS DEVICE; |

| 806 | DETECTING, BY THE APPARATUS, A SECOND WIRELESS MESSAGE FROM A SECOND WIRELESS DEVICE, WHILE CONNECTED TO THE FIRST WIRELESS DEVICE; |

| 808 | COMPARING, BY THE APPARATUS, A MEASURED SIGNAL STRENGTH OF THE SECOND WIRELESS MESSAGE, WITH THE MAINTAINED SIGNAL STRENGTH ASSOCIATED WITH THE FIRST WIRELESS DEVICE; AND |

| 810 | SWITCHING, BY THE APPARATUS, THE CONNECTION FROM THE FIRST WIRELESS DEVICE TO THE SECOND WIRELESS DEVICE WHEN THE MEASURED SIGNAL STRENGTH OF THE SECOND WIRELESS MESSAGE IS GREATER THAN THE MAINTAINED SIGNAL STRENGTH ASSOCIATED WITH THE FIRST WIRELESS DEVICE. |

FIG. 8A

EP 2 934 030 A1

850

852 — ESTABLISHING, BY AN APPARATUS, A WIRELESS CONNECTION WITH A FIRST WIRELESS DEVICE;

854 — TRANSMITTING, BY THE APPARATUS, WIRELESS MESSAGES INDICATING ITS PRESENCE WHILE BEING CONNECTED WITH THE FIRST WIRELESS DEVICE; AND

856 — RELINQUISHING, BY THE APPARATUS, THE CONNECTION WITH THE FIRST WIRELESS DEVICE IN RESPONSE TO RECEIVING A DISCONNECT FROM THE FIRST WIRELESS DEVICE.

FIG. 8B

Magnetic
Storage

Optical Disc
Storage

Removable
Storage
126

Semiconductor
Memory Circuit
Device Storage

Micro-SD
Semiconductor
Memory Card
Storage

# FIG. 9

Europäisches
Patentamt

European
Patent Office

Office européen
des brevets

## EUROPEAN SEARCH REPORT

Application Number

EP 15 16 1278

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/024018 A1 (CHANG RUEY-JER [TW] ET AL) 24 January 2013 (2013-01-24)<br>* paragraph [0025] - paragraph [0029]; figure 7 *<br>* paragraph [0034] - paragraph [0037] *<br>* claims 1-10 *<br>----- | 1-11, 13-15 | INV.<br>H04W8/00<br>H04B17/318<br>H04M1/725<br>H04W4/00 |
| X | EP 2 605 492 A1 (OTICON AS [DK]) 19 June 2013 (2013-06-19)<br>* paragraph [0012] - paragraph [0016] *<br>* paragraph [0020] - paragraph [0033] *<br>* paragraph [0043] - paragraph [0047] *<br>----- | 1-11 | |
| X | US 2012/115464 A1 (JANG JIN-HO [KR]) 10 May 2012 (2012-05-10)<br>* paragraph [0058] - paragraph [0086] *<br>* figures 5,6 *<br>----- | 1-15 | |
| A | US 2010/260348 A1 (BHOW GUNJAN D [US] ET AL) 14 October 2010 (2010-10-14)<br>* paragraph [0060] - paragraph [0062] *<br>----- | 1-15 | |
| A | US 2013/260688 A1 (PALIN ARTO [FI] ET AL) 3 October 2013 (2013-10-03)<br>* paragraph [0123] - paragraph [0138] *<br>* paragraph [0162] *<br>----- | 1-15 | TECHNICAL FIELDS SEARCHED (IPC)<br><br>H04W<br>H04B<br>H04M |

The present search report has been drawn up for all claims

| Place of search | Date of completion of the search | Examiner |
|---|---|---|
| Munich | 10 September 2015 | Maciejewski, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 16 1278

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2015

| Patent document cited in search report | | Publication date | Patent family member(s) | | Publication date |
|---|---|---|---|---|---|
| US 2013024018 | A1 | 24-01-2013 | CN<br>DE<br>TW<br>US | 102891657 A<br>102012014570 A1<br>201305904 A<br>2013024018 A1 | 23-01-2013<br>24-01-2013<br>01-02-2013<br>24-01-2013 |
| EP 2605492 | A1 | 19-06-2013 | EP<br>EP<br>US | 2605492 A1<br>2605493 A1<br>2013157573 A1 | 19-06-2013<br>19-06-2013<br>20-06-2013 |
| US 2012115464 | A1 | 10-05-2012 | KR<br>US | 20120047450 A<br>2012115464 A1 | 14-05-2012<br>10-05-2012 |
| US 2010260348 | A1 | 14-10-2010 | US<br>US | 2010260348 A1<br>2012269361 A1 | 14-10-2010<br>25-10-2012 |
| US 2013260688 | A1 | 03-10-2013 | CN<br>EP<br>US<br>WO | 104204846 A<br>2831620 A1<br>2013260688 A1<br>2013144424 A1 | 10-12-2014<br>04-02-2015<br>03-10-2013<br>03-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Bluetooth™ Technical Specifications. Specification version 2.0 + EDR. Bluetooth™ SIG, Inc, 15 October 2004
- *Specification version 2.1 + EDR,* 26 July 2007
- *Specification version 3.0 + HS,* 21 April 2009
- *Core Specification, Version 4.0,* 30 June 2010
- *Specification,* 30 June 2010